(19) Europäisches Patentamt / European Patent Office / Office européen des brevets

(11) **EP 3 725 746 A1**

(12) **EUROPEAN PATENT APPLICATION**
published in accordance with Art. 153(4) EPC

(43) Date of publication:
**21.10.2020 Bulletin 2020/43**

(21) Application number: **18888607.1**

(22) Date of filing: **12.12.2018**

(51) Int Cl.:
*C01G 45/02* (2006.01)   *B01J 23/34* (2006.01)
*C25B 1/04* (2006.01)   *C25B 11/06* (2006.01)

(86) International application number:
**PCT/JP2018/045681**

(87) International publication number:
**WO 2019/117199 (20.06.2019 Gazette 2019/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.12.2017 JP 2017239743**
**29.06.2018 JP 2018124708**

(71) Applicants:
• **RIKEN**
  **Wako-shi**
  **Saitama 351-0198 (JP)**
• **Tosoh Corporation**
  **Yamaguchi 746-8501 (JP)**

(72) Inventors:
• **NAKAMURA Ryuhei**
  **Wako-shi, Saitama 351-0112 (JP)**
• **HAYASHI Toru**
  **Asaka-shi, Saitama 351-0012 (JP)**
• **BONNET Nadege**
  **Wako-shi, Saitama 351-0111 (JP)**
• **SUETSUGU Kazumasa**
  **Shunan-shi, Yamaguchi 746-8501 (JP)**
• **CHIBA Kazuyuki**
  **Ayase-shi, Kanagawa 252-1123 (JP)**

(74) Representative: **TBK**
**Bavariaring 4-6**
**80336 München (DE)**

(54) **MANGANESE OXIDE FOR WATER DECOMPOSITION CATALYSTS, MANGANESE OXIDE-CARBON MIXTURE, MANGANESE OXIDE COMPOSITE ELECTRODE MATERIAL, AND RESPECTIVE METHODS FOR PRODUCING THESE MATERIALS**

(57) To provide a manganese oxide, a manganese oxide/carbon mixture and a manganese oxide composite electrode material, having high catalytic activity produced at low cost, to be used as an anode catalyst for oxygen evolution in water electrolysis, and their production methods.

A manganese oxide for an oxygen evolution electrode catalyst in water electrolysis, which is a manganese oxide having a metallic valence of higher than 3.0 and at most 4.0, having an average primary particle size of at most 80 nm and an average secondary particle size of at most 25 $\mu$m, a manganese oxide/carbon mixture for an oxygen evolution electrode catalyst in water electrolysis, having a proportion of manganese oxide to the total of the manganese oxide and electrically conductive carbon of from 0.5 to 40 wt%, and a manganese oxide composite electrode material which comprises an electrically conductive substrate constituted by fibers at least part of which are covered with the manganese oxide.

EP 3 725 746 A1

**Description**

TECHNICAL FIELD

The present invention relates to a manganese oxide for a water oxidation catalyst, a manganese oxide/carbon mixture for a water oxidation catalyst, a manganese oxide composite electrode material, and their production methods and their applications. More particularly, the present invention relates to a manganese oxide, a manganese oxide/carbon mixture, and a manganese oxide composite electrode material, used as an anode catalyst for oxygen evolution in industrial water electrolysis conducted under alkaline conditions, under neutral conditions or under acidic conditions, or in water electrolysis using a polymer electrolyte membrane (PEM) type electrolytic cell, and their production methods.

BACKGROUND ART

From the viewpoint of depletion of fossil fuel and environmental pollution, utilization of hydrogen as a clean energy and its production process have attracted attention. Water electrolysis method is one of useful means to produce high purity hydrogen gas from a cathode by electrolyzing water and is characterized by oxygen evolution from an anode as the counter electrode at the same time. In order that the water decomposition reaction efficiently proceeds in the water electrolysis method, it is necessary to conduct electrolysis while the electrolysis voltage applied through the electrolysis is kept low, using an electrode catalyst with a low hydrogen overvoltage for the cathode and an electrode catalyst with a low oxygen overvoltage for the anode. As an electrode catalyst material capable of providing excellent low oxygen overvoltage for the anode, compounds represented by rare platinum group metals such as platinum (Pt), iridium (Ir) and ruthenium (Ru), and oxides containing such elements, have been proposed (Patent Documents 1 and 2, Non-Patent Documents 1 to 3).

On the other hand, since an electrode constituted by such a platinum group metal is very expensive, development of an electrode catalyst using an inexpensive transition metal has been in progress. For example, in recent years, transition metal materials constituted by manganese (Mn), iron (Fe), cobalt (Co) or nickel (Ni) have been proposed (Patent Documents 3 and 4, Non-Patent Documents 4 to 7).

However, the catalyst materials constituted by transition metals proposed are problematic in that their activity is very low (the oxygen overvoltage is high) as compared with platinum metal type electrode catalysts. That is, an oxygen evolution electrode catalyst material which is constituted by an inexpensive transition metal and which has a high catalytic activity comparable to platinum group metals such as Pt has not yet been realized, and development of such material is expected.

PRIOR ART DOCUMENTS

PATENT DOCUMENTS

Patent Document 1: JP-A-H08-269761
Patent Document 2: JP-A-2007-514520
Patent Document 3: JP-A-2015-192993
Patent Document 4: WO2009/154753

NON-PATENT DOCUMENTS

Non-Patent Document 1: S.Trasatti, G.Buzzanca, J.Electroanal.Chem., 1971, 29, A1.
Non-Patent Document 2: A.Harriman, I.J.Pickering, J.M.Thomas, P.A.Christensen, J. Chem. Soc., Faraday Trans. 1, 1988, 84, 2795.
Non-Patent Document 3: Y.Zhao, N.M.Vargas-Barbosa, E.A.Hernandez-Pagan, T.E.Mallouk, Small, 2011, 7, 2087.
Non-Patent Document 4: M.M.Najafpour, G.Renger, M.Holynska, A.N.Moghaddam, E.-M.Aro, R.Carpentier, H.Nishihara, J.J.Eaton-Rye, J.-R.Shen, S.I.Allakhverdiev, Chem.Rev., 2016, 116, 2886.
Non-Patent Document 5: T.Takashima, K.Ishikawa, H.Irie, J. Phys. Chem. C, 2016, 120, 24827.
Non-Patent Document 6: J.B.Gerken, J.G.McAlpin, J.Y.C.Chen, M.L.Rigsby, W.H.Casey, R.D.Britt, S.S.Stahl, J. Am. Chem. Soc., 2011, 133, 14431.
Non-Patent Document 7: M.Dinca, Y.Surendranath, D.G.Nocera, Proc. Natl. Acad. Sci. U.S.A., 2010, 107, 10337.

## DISCLOSURE OF INVENTION

### TECHNICAL PROBLEM

The object of the present invention is to provide a manganese oxide for a water oxidation catalyst, a manganese oxide/carbon mixture, a manganese oxide composite electrode material, and their production methods.

More particularly, it is to provide a manganese oxide for a water oxidation catalyst (hereinafter sometimes referred to as the manganese oxide of the present invention) which is an anode catalyst material for oxygen evolution in industrial water electrolysis conducted under alkaline conditions, under neutral conditions or under acidic conditions or in water electrolysis using a polymer electrolyte membrane (PEM) type electrolytic cell, which is available at a low cost and which has high oxygen evolution catalytic activity, a manganese oxide/carbon mixture for a water oxidation catalyst, a manganese oxide composite electrode material and their production methods.

### SOLUTION TO PROBLEM

The present inventors have conducted extensive studies on catalyst materials used as an oxygen evolution electrode catalyst in water electrolysis and as a result, found that a manganese oxide having a metallic valence of higher than 3.0 and at most 4.0 and having the average primary particle size controlled to be at most 80 nm and the average secondary particle size controlled to be at most 25 $\mu$m, has high oxygen evolution electrode catalytic activity, and accomplished the present invention. That is, the present invention provides a manganese oxide for an oxygen evolution electrode catalyst in water electrolysis, having a metallic valence of higher than 3.0 and at most 4.0, and having the average primary particle size controlled to be at most 80 nm and the average secondary particle size controlled to be at most 25 $\mu$m.

The present inventors have further found that when the manganese oxide of the present invention and carbon as an electrically conductive material are mixed, the optimum mixing ratio is, as the proportion of the manganese oxide, is at least 0.5 wt% and at most 40 wt%, whereby excellent catalytic activity of the manganese oxide of the present invention is sufficiently achieved, and more excellent catalytic activity is achieved particularly in PEM type water electrolysis under acidic conditions. That is, the present invention provides a manganese oxide/carbon mixture for an oxygen evolution electrode catalyst in water electrolysis, having a proportion of the manganese oxide to the total of the manganese oxide of the present invention and an electrically conductive carbon of at least 0.5 wt% and at most 40 wt%.

The present inventors have further found that a manganese oxide composite electrode material comprising fibers of an electrically conductive substrate, at least part of which are covered with the manganese oxide of the present invention, has further higher oxygen evolution electrode catalytic activity. That is, the present invention provides a manganese oxide composite electrode material for an oxygen evolution electrode, which comprises an electrically conductive substrate constituted by fibers at least part of which are covered with the manganese oxide of the present invention.

### ADVANTAGEOUS EFFECTS OF THE INVENTION

The manganese oxide of the present invention, the manganese oxide/carbon mixture of the present invention, and the manganese oxide composite electrode material of the present invention, have high activity and function as an inexpensive and excellent anode catalyst for oxygen evolution, in industrial water electrolysis conducted under alkaline conditions, under neutral conditions or under acidic conditions, and in water electrolysis using a PEM type electrolytic cell.

Further, by adding carbon dioxide to the electrolysis system, carbon dioxide is reduced at the cathode, whereby hydrocarbon compounds (such as formic acid, formaldehyde, methanol, methane, ethane and propane) may be produced.

### BRIEF DESCRIPTION OF DRAWINGS

Fig. 1 is an XRD pattern of the trimanganese tetroxide ($Mn_3O_4$) obtained in Example 1.
Fig. 2 is XRD patterns of the manganese oxides obtained in Examples 1 to 3.
Fig. 3 is a particle sized distribution diagram of the manganese oxide obtained in Example 2.
Fig. 4 is an XRD pattern of the manganese oxide obtained in Comparative Example 3.
Fig. 5 is linear sweep voltammograms illustrating changes of the current and the potential at the time of evolution of oxygen in Examples 1 to 3 and Comparative Examples 1 to 4.
Fig. 6 is linear sweep voltammograms illustrating changes of the current and the potential at the time of evolution of oxygen in Example 5 and Comparative Examples 5 to 8.

Fig. 7 is Tafel plots illustrating changes of the logarithm of the current density and the potential at the time of evolution of oxygen in Example 5 and Comparative Examples 5 to 8.

Fig. 8 is current-voltage curves at the time of evolution of oxygen in a PEM type electrolytic cell in Example 9 and Comparative Examples 9 to 11.

Fig. 9 is a photograph (SEM photograph) of surface appearance of carbon paper (TGP-H-060, Toray Industries, Inc.) as an electrically conductive substrate used in the present invention.

Fig. 10 is a photograph (SEM photograph) of surface appearance of the composite electrode material obtained in Example 10.

Fig. 11 is a photograph (SEM photograph) of surface appearance of the composite electrode material obtained in Example 11.

Fig. 12 is current-voltage curves of the composite electrode materials obtained in Examples 10 to 12 and Comparative Example 12 at the time of evolution of oxygen in a PEM type electrolytic cell.

Fig. 13 is XRD patterns of the manganese oxide/carbon mixtures obtained in Example 4, Example 8 and Comparative Example 5.

Fig. 14 is XRD patterns of the manganese oxide composite electrode materials obtained in Examples 13 and 14.

Fig. 15 is XRD patterns of the manganese oxide composite electrode materials obtained in Examples 19 and 21.

Fig. 16 is a photograph (SEM photograph) of the appearance of the cross section of the manganese oxide composite electrode material obtained in Example 15, and photographs (EPMA photographs) of element distribution of carbon derived from the substrate and manganese derived from manganese oxide.

Fig. 17 is a photograph (SEM photograph) of the appearance of the cross section of the manganese oxide composite electrode material obtained in Example 19, and photographs (EPMA photographs) of element distribution of titanium derived from the substrate and manganese derived from manganese oxide.

Fig. 18 is current-voltage curves of the manganese oxide composite electrode materials obtained in Examples 13 to 16 and Comparative Example 12 at the time of evolution of oxygen in a PEM type electrolytic cell.

Fig. 19 is current-voltage curves of the manganese oxide composite electrode materials obtained in Examples 13, 17 and 18 and Comparative Example 12 at the time of evolution of oxygen in a PEM type electrolytic cell.

Fig. 20 is current-voltage curves of the manganese oxide composite electrode materials obtained in Examples 19 and 20 and Comparative Example 12 at the time of evolution of oxygen in a PEM type electrolytic cell.

## DESCRIPTION OF EMBODIMENTS

Now, the present invention will be described in further detail.

First, decomposition of water by electrolysis will be described with reference to a reaction in which the reaction site is in an acidic environment, such as PEM type water electrolysis, as an example. On the cathode catalyst, hydrogen is formed by a reaction of two protons and two electrons as shown in Formula 1.

$$2H^+ + 2e^- \rightarrow H_2 \qquad \text{Formula 1}$$

On the other hand, on the anode catalyst, oxygen is formed together with four electrons and four protons from two water molecules, as shown in Formula 2.

$$2H_2O \rightarrow O_2 + 4H^+ + 4e^- \qquad \text{Formula 2}$$

And, as a whole, a reaction by which two hydrogen molecules and one oxygen molecule are formed from two water molecules occurs, as shown in Formula 3.

$$2H_2O \rightarrow 2H_2 + O_2 \qquad \text{Formula 3}$$

The oxygen evolution reaction in the Formula 2 is generally considered as the rate-determining step in the whole reaction, and development of a catalyst which can promote the reaction with a minimum energy is considered to be important in this technical field. The present invention is to provide an oxygen evolution electrode catalyst which has high water oxidation catalytic performance.

The manganese oxide of the present invention has a manganese with metallic valence of higher than 3.0 and at most 4.0. A manganese oxide having a metallic valence of 3.0 or lower has low chemical stability as a catalyst material and particularly when used in acidic environment as in the case of PEM, it is likely to be eluted as divalent manganese ions one-sidedly and be exhausted.

On the other hand, a manganese oxide having a valence state higher than 4.0 also has low chemical stability since soluble pentavalent manganese or heptavalent manganese is contained, and stable catalytic activity is hardly obtained. In order to obtain favorable oxygen evolution catalytic activity, it is preferred to control the manganese metallic valence to be at least 3.5 and at most 4.0, more preferably at least 3.7 and at most 4.0.

The average primary particle size of the manganese oxide of the present invention is adjusted to be at most 80 nm. If the average primary particle size is larger than 80 nm, the reaction catalyst active sites tend to decrease, and the catalytic activity tends to be insufficient. In order to obtain favorable catalytic activity, the average primary particle size is preferably at most 70 nm, particularly preferably at most 50 nm.

The lower limit of the average primary particle size is not particularly limited, and the average primary particle size is usually at least 5 nm, preferably at least 10 nm.

The average primary particle size is defined as follows and is obtained as described hereinafter. Krumbein diameters are measured by microscope method to obtain number averages of major axis lengths and minor axis lengths, which are respectively taken as the average major axis length and the average minor axis length, from which the two axes average size (half of the sum of the average major axis length and the average minor axis length) is obtained and is defined as the average primary particle size.

The average secondary particle size of the manganese oxide of the present invention is at most 25 $\mu$m. If the average secondary particle size is larger than 25 $\mu$m, the contact site with carbon as an electrically conductive material decreases, as described hereinafter, and transfer of electrons which contribute to the reaction is inhibited, whereby the catalytic activity tends to be insufficient. In order to obtain favorable catalytic activity, the average secondary particle size is preferably at most 10 $\mu$m, more preferably at most 5 $\mu$m, further preferably at most 2 $\mu$m. The lower limit of the average secondary particle size is not particularly limited, and the average secondary particle size is usually at least 0.1 $\mu$m, preferably at least 0.5 $\mu$m.

The average secondary particle size is defined by a measured value of wet type particle size distribution equipment using laser diffraction method and is obtained as described hereinafter.

The manganese oxide of the present invention preferably has a BET specific surface area of at least 10 $m^2/g$ and at most 260 $m^2/g$. If the BET specific surface area is smaller than 10 $m^2/g$, penetration of the electrolytic solution into the reaction site is inhibited, and therefore, the catalytic activity tends to be insufficient. On the other hand, if it exceeds 260 $m^2/g$, closed porous structures tend to be dominant, which inhibit not only penetration of the electrolytic solution into the manganese oxide particles but also electron conduction and ionic migration. Therefore the catalytic activity tends to be insufficient. The BET specific surface area is more preferably at least 30 $m^2/g$ and at most 260 $m^2/g$, particularly preferably at least 35 $m^2/g$ and at most 255 $m^2/g$.

The crystal structure of the manganese oxide of the present invention is not particularly limited, and is preferably so-called $\gamma$ type or $\alpha$ type, particularly preferably $\gamma$ type.

Further, the electrode potential of the manganese oxide of the present invention is not particularly limited, and as the alkali potential in a 40 wt% KOH solution, preferably at least 200 mV and at most 320 mV, particularly preferably at least 240 mV and at most 300 mV.

By making the manganese oxide of the present invention be supported on the electrode, the manganese oxide of the present invention functions as the oxygen evolution electrode active material in water electrolysis and can impart the catalytic performance for the water oxidation reaction to the oxygen evolution electrode. By laminating the oxygen evolution electrode containing the oxygen evolution electrode active material, a polymer electrolyte membrane and an electrode having a hydrogen evolution catalyst, a laminate is obtained. The polymer electrolyte membrane may, for example, be a fluororesin type cation exchange membrane, and the hydrogen evolution catalyst may, for example, be platinum fine particles. In the present invention, by the oxygen evolution electrode, a water electrolysis apparatus can be constituted, and by water electrolysis using the oxygen evolution electrode, hydrogen can be produced efficiently.

Now, the method for producing the manganese oxide of the present invention will be described.

Among the manganese oxides of the present invention, a manganese oxide having a relatively large BET specific surface area, for example, a BET specific surface area of larger than 50$m^2/g$, may be obtained by treating a manganese oxide having low valence, for example, lower than 3.0, preferably 2.5 to 3.0, with a high concentrated acid to conduct disproportionation reaction.

The low valence manganese oxide may, for example, be a manganese oxide such as trimanganese tetroxide ($Mn_3O_4$) obtained by mixing a solution containing divalent manganese ions with an alkaline solution and oxidizing the obtained mixed solution, manganese sesquioxide ($Mn_2O_5$) or a mixture thereof. The oxidation of the mixed solution may be conducted using an oxidizing agent such as air or oxygen. The low valence manganese oxide is preferably trimanganese tetroxide ($Mn_3O_4$).

The formulae 3 and 4 show disproportionation reaction in the case of using trimanganese tetroxide ($Mn_3O_4$) as the low valence Mn oxide.

$$Mn_3O_4 + 8H^+ \rightarrow Mn^{2+} + 2Mn^{3+} + 4H_2O \qquad \text{Formula 3}$$

$$2Mn^{3+} + 2H_2O \rightarrow MnO_2 + Mn^{2+} + 4H^+ \qquad \text{Formula 4}$$

Further, the formulae 5 and 6 show disproportionation reaction in the case of using manganese sesquioxide ($Mn_2O_3$) as the low valence Mn oxide.

$$Mn_2O_3 + 6H^+ \rightarrow 2Mn^{3+} + 3H_2O \qquad \text{Formula 5}$$

$$2Mn^{3+} + 2H_2O \rightarrow MnO_2 + Mn^{2+} + 4H^+ \qquad \text{Formula 6}$$

The manganese oxide of the present invention may be obtained by immersing a low valence Mn oxide in a high concentrated acid solution, followed by stirring for a certain time with heating, and by filtration. The kind of the acid may, for example, be sulfuric acid or nitric acid, and the concentration of the acid solution may, for example, be at least 1 mol/L (liter) and at most 8 mol/L. The stirring may be conducted with heating to, for example, at least 40°C and at most 90°C, for a stirring time of, for example, at least 1 hour and at most 72 hours. The liter may sometimes be represented as L for convenience, and the same applies hereinafter.

On the other hand, among the manganese oxides of the present invention, a manganese oxide having a BET specific surface area of, for example, at most 50 $m^2$/g, may be obtained by electrolysis, for example, using as an electrolytic solution a sulfuric acid/manganese sulfate mixed solution, at a sulfuric acid concentration in the sulfuric acid/manganese sulfate mixed solution of higher than 25 g/L and at most 65 g/L for example, at an electrolysis current density of at least 0.3 A/$dm^2$ and at most 0.9 A/$dm^2$, at an electrolysis temperature of at least 93°C and at most 98°C.

In the above method for producing the manganese oxide by electrolysis, a method by using a sulfuric acid/manganese sulfate mixed solution as an electrolytic solution, is different from an electrolysis method by using only manganese sulfate aqueous solution as an electrolytic solution, it is possible to control the sulfuric acid concentration during the electrolysis period, whereby the sulfuric acid concentration can be optionally set even when the electrolysis is carried out for a long period of time.

In the method for producing the manganese oxide by electrolysis using the sulfuric acid/manganese sulfate mixed solution, a sulfuric acid concentration is controlled preferably to higher than 25 g/L and at most 65 g/L, more preferably at least 32 g/L and at most 50 g/L.

Further, it is preferred to optionally change the sulfuric acid concentration during the electrolysis, particularly to control the sulfuric acid concentration at the time of completion of the electrolysis to be higher than the sulfuric acid concentration at the time of start of the electrolysis, so as to control the average primary particle size and the electrode potential to be within preferred ranges. In such a case, the sulfuric acid concentration at the time of start of the electrolysis is preferably higher than 28 g/L and at most 40 g/L, more preferably higher than 30 g/L and at most 35 g/L. Further, the sulfuric acid concentration at the time of completion of the electrolysis is preferably at least 32 g/L and at most 55 g/L, more preferably higher than 35 g/L and at most 50 g/L, further preferably higher than 40 g/L and at most 45 g/L.

The mechanism of the effect obtained when the sulfuric acid concentration is changed as mentioned above is not clearly understood, but is considered as follows. By conducting electrolysis at a relatively low sulfuric acid concentration in a first half stage of the reaction, not only corrosion damages on the electrode substrate such as a pure titanium plate are directly reduced, but also a manganese oxide deposited layer having a relatively large primary particle size, a small BET specific surface area and high packing property can be obtained in a first half stage. Then, in the electrolysis at a relatively high sulfuric acid concentration in a latter half stage, since the electrode substrate such as a pure titanium plate has been already covered with the manganese oxide deposited layer, it is less susceptible to corrosion damages, and a manganese oxide with a higher anode electrode potential is likely to be obtained.

In the method for producing the manganese oxide by electrolysis, it is preferred to change the sulfuric acid concentration as between the first half stage of the electrolysis and the latter half stage of the electrolysis, not to gradually change the sulfuric acid concentration during the electrolysis from the start of the electrolysis until completion of the electrolysis.

The proportion of the electrolysis time in the first half stage of the electrolysis to the latter half stage of the electrolysis is not particularly limited and for example, the proportion of the electrolysis time at a low sulfuric acid concentration to the electrolysis time at a high sulfuric acid concentration is preferably within a range of from 1:9 to 9:1, particularly preferably within a range of from 3:7 to 7:3.

The sulfuric acid concentration in the sulfuric acid/manganese sulfate mixed solution is a value excluding divalent anion (sulfate ion) of manganese sulfate.

In the method for producing the manganese oxide by electrolysis, the electrolysis current density is not particularly limited but is preferably at least 0.3 A/$dm^2$ and at most 0.9 A/$dm^2$, so as to maintain an appropriate BET specific surface area, whereby the manganese oxide of the present invention can readily be produced by electrolysis efficiently and stably. In order to obtain the manganese oxide of the present invention more stably, the electrolysis current density is more preferably at least 0.5 A/$dm^2$ and at most 0.88 A/$dm^2$, further preferably at least 0.55 A/$dm^2$ and less than 0.8

A/dm$^2$.

In the production of the manganese oxide by electrolysis, it is possible to supply the sulfuric acid/manganese sulfate mixed solution, and the manganese concentration in the electrolytic solution supplied is not particularly limited and may, for example be from 30 to 60 g/L.

The electrolysis temperature may, for example, be at least 93°C and at most 98°C. The efficiency for production of the manganese oxide deposited by electrolysis depends on the electrolysis temperature, and accordingly the electrolysis temperature is preferably higher than 94°C.

The manganese oxide formed on an electrode such as a pure titanium plate by electrolysis is separated from the electrode and roughly crushed e.g. by a jaw crusher, and ground and adjusted so to have a predetermined average secondary particle size as a manganese oxide simple substance e.g. by a roller mill, a vertical mill, a Loesche mill or a jet mill. Then, the produced manganese oxide is subjected to a washing step and a neutralizing step, to remove the remaining electrolytic solution and then dried e.g. by a flash drying apparatus. At the time of flash drying, a submicron-level manganese oxide fine powder formed as by-product by overgrinding in the grinding step may be recovered and separated by a bag filter of a dust collector. Further, a calcining step at a temperature of at least 200°C and at most 500°C may sometimes be conducted to obtain the manganese oxide of the present invention.

The manganese oxide/carbon mixture of the present invention preferably has a proportion of the manganese oxide of at least 0.5 wt% and at most 40 wt%. If the proportion is less than 0.5 wt%, the intrinsic reaction active sites of the manganese oxide decrease, and the catalytic activity will be insufficient, and if it exceeds 40 wt%, the contact between the manganese oxide and carbon as the electrically conductive material will be impaired, and it is supposed that transfer of electrons which contribute to the reaction is restricted.

In order that excellent catalytic activity is exhibited, the proportion of the manganese oxide is preferably at least 1 wt% and at most 20 wt%, more preferably at least 2 wt% and at most 17 wt%, further preferably at least 4 wt% and at most 10 wt%.

The XRD of the manganese oxide/carbon mixture of the present invention has characteristic diffraction lines. The diffraction pattern has, in order from the low angle side, at least diffraction lines which provide d representing the interplanar spacings of 0.355±0.01 nm, 0.265±0.01 nm, 0.250±0.05 nm, 0.240±0.004 nm, 0.219±0.004 nm, 0.208±0.004 nm, 0.167±0.002, and 0.143±0.002 nm.

By making the manganese oxide/carbon mixture of the present invention be supported on the electrode, the manganese oxide/carbon mixture of the present invention functions as the oxygen evolution electrode active material in water electrolysis and can impart catalytic performance in water oxidation reaction to the oxygen evolution electrode. By laminating the oxygen evolution electrode containing the oxygen evolution electrode active material, a polymer electrolyte membrane and an electrode having a hydrogen evolution catalyst, a laminate is obtained. The polymer electrolyte membrane may, for example, be a fluororesin type cation exchange membrane, and the hydrogen evolution catalyst may, for example, be platinum fine particles. In the present invention, by the oxygen evolution electrode, a water electrolysis apparatus can be constituted, and by water electrolysis using the oxygen evolution electrode, hydrogen can be produced.

As the method for producing the manganese oxide/carbon mixture of the present invention, it is preferred to mix the manganese oxide obtained by the above method, in its ratio of at least 0.5 wt% and at most 40 wt%, with carbon by the following wet mixing method.

In the wet mixing method, it is preferred that first, a predetermined amount of the manganese oxide and a predetermined amount of carbon are weighed, loosened and mixed in an agate mortar, and the mixture is put, for example, in a pot in which a dispersion medium such as ethanol and balls of e.g. zirconia are put, and rotated, for example, overnight or longer, in a slurry state to conduct ball mill mixing.

After completion of the ball mill mixing, the obtained slurry is subjected to sieving to remove the zirconia balls, and a manganese oxide/carbon mixture is recovered in the form of an ethanol slurry. To the recovered ethanol slurry of the manganese oxide/carbon mixture, materials necessary for an electrode, for example, Nafion (trademark by Chemours, the same applies hereinafter) dispersion (DE520, DE521, DE1020, DE1021, DE2020 or DE2021), are added to prepare an electrically conductive catalyst ink, which can be used as a catalyst-forming slurry to be applied on an electrode.

After the slurry is applied on an electrode, ethanol as the dispersion medium is evaporated e.g. by air-drying, whereby an electrode catalyst having a manganese oxide/carbon catalyst present in a thin film form on its surface can be formed.

The manganese oxide composite electrode material of the present invention comprises an electrically conductive substrate constituted by fibers at least part of which are covered with the manganese oxide of the present invention. In such a case, the amount of the covering manganese oxide of the present invention is, per geometrical area of the electrically conductive substrate, preferably at least 0.1 mg/cm$^2$ and at most 25 mg/cm$^2$. The geometrical area corresponds to the project area of the electrically conductive substrate, and the thickness of the substrate is not considered.

When the amount of the covering manganese oxide of the present invention is within the above range, the fibers can be covered with the manganese oxide in an islands form or substantially the whole outer surface of the fibers can be covered, depending on the diameter and the porosity of the fibers constituting the electrically conductive substrate, and the average covering thickness can be adjusted to be approximately at most 25 $\mu$m. Since the manganese oxide covering the fibers is constituted by secondary particles, usually, the average covering thickness and the average secondary particle size of the manganese oxide constituting the covering agree with each other.

In the manganese oxide composite electrode material of the present invention, in proportion to the amount of the covering manganese oxide, the average thickness of the manganese oxide covering the fibers of the electrically conductive substrate increases, and the amount of the covering manganese oxide is preferably at least 0.1 mg/cm$^2$ and at most 20 mg/cm$^2$, further preferably at least 0.2 mg/cm$^2$ and at most 15 mg/cm$^2$, particularly preferably at least 5 mg/cm$^2$ and at most 10 mg/cm$^2$. The thickness of the manganese oxide covering layer may be obtained also by, for example, subtracting the diameter of an electrically conductive fiber as a unit constituting the electrically conductive substrate, from a scanning electron microscope (SEM) image.

The XRD of the manganese oxide composite electrode material of the present invention has characteristic diffraction lines. In a case where the electrically conductive substrate is carbon paper, the XRD has, in order from the low angle side, at least diffraction lines which provide d representing the interplanar spacings of 0.405$\pm$0.01 nm, 0.34$\pm$0.01 nm, 0.306$\pm$0.005 nm, 0.244$\pm$0.004 nm, 0.213$\pm$0.004 nm, 0.169$\pm$0.002 nm, 0.164$\pm$0.002 nm and 0.139$\pm$0.002 nm. Further, in a case where the electrically conductive substrate is a titanium mesh, the XRD has, in order from the low angle side, at least diffraction lines which provide d representing the interplanar spacings of 0.40$\pm$0.01 nm, 0.256$\pm$0.005 nm, 0.244$\pm$0.004 nm, 0.235$\pm$0.004 nm, 0.225$\pm$0.004 nm, 0.213$\pm$0.004 nm, 0.164$\pm$0.002 nm and 0.139$\pm$0.002 nm.

The manganese oxide composite electrode material of the present invention may be obtained by electrodepositing a manganese oxide in the above sulfuric acid/manganese sulfate mixed solution, on the electrically conductive substrate represented by carbon paper or a titanium mesh, instead of the electrode substrate of the pure titanium plate. In such a case, electrodeposition of the manganese oxide is conducted preferably so that the amount of the covering manganese oxide per geometrical area of the electrically conductive substrate is within the above preferred range.

The electrically conductive substrate is preferably one, for example, obtained by forming or sintering electrically conductive fibers of e. g. carbon or titanium having a diameter of at most 100 $\mu$m, into a plate shape having a thickness of at most 1 mm. The porosity of the electrically conductive substrate is, for example, preferably at least 40%, more preferably from 50 to 90%. The porosity is defined by the volume of spaces without electrically conductive fibers and the like in the volume of the electrically conductive substrate.

The electrically conductive substrate is preferably subjected to an acid treatment with hydrochloric acid, sulfuric acid, nitric acid, oxalic acid or the like before electrodepositing the manganese oxide, so that a passive coating of the substrate surface is removed or the substrate surface is hydrophilized.

Further, it is preferred to immerse the electrically conductive substrate in e.g. a dispersion of a fluororesin to impart water repellency, for the purpose of controlling the electrodeposition position of the manganese oxide on the electrically conductive substrate, or to impart gas diffusion property which is important when practically used as an electrode in water electrolysis.

As conditions when the manganese oxide of the present invention is electrodeposited on the electrically conductive substrate, for example, as mentioned above, electrodeposition may be conducted selecting the respective ranges of the sulfuric acid concentration and the manganese concentration of the sulfuric acid/manganese sulfate mixed solution, the electrolysis current density, the electrolysis temperature and the like, for an electrolysis time of from 5 minutes to 120 minutes, and washing with water and drying are conducted after completion of the electrolysis, whereby the manganese oxide composite electrode material of the present invention is obtained.

By shielding one side of the electrically conductive substrate with e.g. a resin film, at the time of electrodeposition of the manganese oxide, an electrodeposited film of the manganese oxide is preferentially coated only on one side, whereas manganese oxide is not substantially electrodeposited on the other side, so that manganese oxide can be made unevenly electrodeposited on purpose.

Further, it is effective to apply, as the post treatment to the manganese oxide composite electrode material of the present invention, either one of acid immersion and heating or both of acid immersion and heating. The post treatment by acid immersion is carried out, for example, by immersing the manganese oxide composite electrode material in a 0.5 mol/L to 5 mol/L sulfuric acid for from 30 minutes to 2 hours, followed by washing with water and drying. Further, the post treatment by heating is carried out, for example, by heating the manganese oxide composite electrode in air or nitrogen atmosphere at from 180°C to 300°C for from 30 minutes to 2 hours.

The effect by such post treatment on the manganese oxide composite material has not yet been clearly understood, and is estimated to increase the adhesion between the manganese oxide and the electrically conductive fibers or to cause a change in the crystal structure or the crystallinity of the manganese oxide catalyst.

By laminating the manganese oxide composite electrode material of the present invention, a polymer electrolyte membrane and an electrode having a hydrogen evolution catalyst, a laminate is obtained. The polymer electrolyte membrane may, for example, be a fluororesin type cation exchange membrane, and the hydrogen evolution catalyst may, for example, be platinum fine particles. In the present invention, by the manganese oxide composite electrode material of the present invention, a water electrolysis apparatus can be constituted, and by water electrolysis using the manganese oxide composite electrode material, hydrogen can be produced.

EXAMPLES

Now, the present invention will be described in further detail with reference to Examples and Comparative Examples, but it should be understood that the present invention is by no means restricted thereto.

<Measurement of metallic valence of manganese oxide>

0.200 g of a manganese oxide is weighed in an Erlenmeyer flask, 10 mL of a 0.3 M/L oxalic acid aqueous solution and 20 mL of (1+1) sulfuric acid aqueous solution are added, and heated to 70°C for dissolution. While keeping the mixture to be from 55 to 60°C, titration is conducted with a 0.1N potassium permanganate solution, and the liquid amount at the end point is obtained. The amount of the 0.1N potassium permanganate solution required for a blank test is obtained, and the tetravalent manganese oxide purity is calculated in accordance with the following formula 7.
Tetravalent manganese oxide purity (%) =(((B-A)x0.4347)/S)x100 Formula 7

A: liquid amount (mL) of 0.1N potassium permanganate solution required for blank test
B: liquid amount (mL) of 0.1N potassium permanganate solution required for titration
S: amount (g) of manganese oxide collected

Then, by ICP method, the total Mn purity (%) of the manganese oxide is obtained, and the metallic valence is determined from the tetravalent manganese oxide purity (%) in accordance with the following formula 8.

$$\text{Metallic valence} = (\text{tetravalent manganese purity (\%)} \times 63.19)/\text{total Mn purity (\%)} \times 2$$

Formula 8

<Measurement of primary particle sizes of manganese oxide and carbon>

Measurement of primary particle sizes of the manganese oxide, and the manganese oxide and carbon in the manganese oxide/carbon mixture, was conducted by microscope method by observing a scanning electron microscope (SEM) image. As the measurement apparatus, a field emission scanning electron microscope (S-4800, manufactured by Hitachi High-Technologies Corporation) was used.

<Measurement of average secondary particle size of manganese oxide>

0.5 g of the manganese oxide was poured into 50 mL of pure water and ultrasonic irradiation was applied for 10 seconds to prepare a dispersion slurry, the predetermined amount of which was charged into a measurement apparatus (microtrac HRA, manufactured by HONEYWELL), and the particle size distribution was measured by laser diffraction method. From the obtained particle size distribution data, the average secondary particle size (D50) of 50% manganese oxide particles was obtained. For measurement, the refractive index of pure water of 1.33 and the refractive index of manganese dioxide of 2.20 were employed.

<Measurement of BET specific surface area of manganese oxide>

The BET specific surface areas of manganese dioxide and a manganese oxide/manganese dioxide mixture were measured by nitrogen adsorption by BET one point method. As the measurement apparatus, gas adsorption specific surface area measurement apparatus (FlowSorb III, manufactured by Shimadzu Corporation) was used. Prior to the measurement, the measurement sample was heated at 150°C for 40 minutes for deaeration.

<Measurement of alkali potential of manganese oxide>

The alkali potential was measured in a 40 wt% KOH aqueous solution as follows.
To 3 g of the manganese oxide, 0.9 g of graphite (KS-44) as an electrically conductive agent was added to obtain a mixed powder, to which 4 mL of a 40% KOH aqueous solution was added to prepare a mixture slurry of the manganese oxide, the graphite and the KOH aqueous solution. The potential of the mixture slurry was measured on the basis of a mercury/mercury oxide reference electrode, whereby the alkali potential of the manganese oxide was obtained.

<Calculation of interplanar spacings (d values) of manganese oxide/carbon mixture and manganese oxide composite electrode material by XRD measurement>

Using an x-ray diffraction apparatus (manufactured by Rigaku Corporation, Ultima IV), diffraction lines of the manganese oxide composite electrode material were measured. As a light source, CuK$\alpha$ rays ($\lambda$=1.5405Å) were employed, the measurement mode was step scanning, the scanning speed was 4.0000° per minute, the step width was 0.02°, and the measurement range was 5° to 80° as $2\theta$. The diffraction lines of the obtained XRD pattern were subjected to Gaussian treatment to obtain $2\theta$ at the peak top, and d values were obtained in accordance with Bragg' equation ($n\lambda=2d\sin\theta$, n=1) and taken as the interplanar spacings.

<Evaluation 1 of oxygen evolution electrode catalyst properties (Examples 1 to 3, Comparative Examples 1 to 4)>

<Making catalyst be supported on FTO electrode>

The manganese oxide was made to be supported on a fluorine-doped tin oxide electrode (FTO electrode) (manufactured by SPD Laboratory, Inc.) as follows. 40 mg of the manganese oxide was dispersed in 100 mL of ultrapure water, and the obtained dispersion was sprayed on the FTO electrode by an automatic spray gun (ST-6, manufactured by FUSO SEIKI Co., Ltd.) to prepare an electrode. The FTO electrode was put on a hotplate heated to 200°C so that sprayed dispersion would not formed into droplets on the substrate.

<Electrochemical measurement 1, linear sweep voltammetry (FTO electrode)>

To evaluate the water oxidation catalytic performance of the manganese oxide, linear sweep voltammetry was conducted. In the experiment, three-electrode system was employed, using the FTO electrode having the catalyst supported as the working electrode, a platinum wire as the counter electrode and a Ag/AgCl (saturated KCl) electrode (+0.199V vs. SHE) as the reference electrode. For the electrolytic solution, a 0.5M $Na_2SO_4$ aqueous solution prepared with sodium sulfate, adjusted to have pH -0.2 with sulfuric acid was used.
In this measurement, an electrochemical cell was used, the potential was swept from the negative direction. The electrochemical cell had the working electrode on the bottom and the counter and reference electrodes inserted from above. The distance between the working electrode and the reference electrode was 2 mm. The potential sweep rate was 10 mV/s so that the potential at which the current started to increase (onset potential) would readily be distinguished.
Using the above evaluation apparatus under the above conditions, the current density at a potential of 1.7 V vs. RHE and the overvoltage (polarization from the equilibrium potential) at 0.5 mA/cm$^2$ were measured.

<Evaluation 2 of oxygen evolution electrode catalyst properties (Examples 4 to 8 and Comparative Examples 5 to 8)>

<Making catalyst be supported on RDE electrode>

The manganese oxide/carbon mixture catalyst was made to be supported on a rotating disk electrode (RDE electrode) as follows. An ethanol slurry of the manganese oxide/carbon mixture in an amount containing 1 mg of the manganese oxide, and 6.17 $\mu$L of a 10 wt% Nafion dispersion (DE1021) were mixed, and ultrapure water was added to make the total amount to be 500 $\mu$L thereby to prepare an electrically conductive catalyst ink. 10 $\mu$L of the electrically conductive catalyst was dropped on a glassy carbon RDE electrode (diameter 5 mm) and applied, and air-dried to evaporate ethanol thereby to make the manganese oxide/carbon mixture catalyst be supported on the glassy carbon RDE electrode.
For comparison, the catalyst was supported in such a manner that 1 mg of the catalyst, 4 mg of electrically conductive carbon black (Vulcan XC-72, manufactured by Cabot Corporation), and 500 $\mu$L of diluted Nafion dispersion (mixture of 10 wt% Nafion dispersion (DE1021), ethanol and water in a volume ratio of 1:20:60) were mixed to prepare an electrically conductive catalyst ink, and 10 $\mu$L thereof was dropped and applied, and air-dried.

<Electrochemical measurement 2, linear sweep voltammetry (RDE electrode)>

To evaluate water oxidation catalytic performance of the manganese oxide/carbon mixture catalyst, linear sweep voltammetry was conducted. As the experimental system, three-electrode system was employed, using the glassy carbon RDE electrode having the catalyst supported as the working electrode, a platinum wire as the counter electrode and a Ag/AgCl (saturated KCl) electrode (+0.199 V vs. SHE) as the reference electrode. For the electrolytic solution, a 0.5M $Na_2SO_4$ aqueous solution prepared with sodium sulfate, adjusted to have pH 7.5 with a 0.1M NaOH aqueous solution was used. In order to prevent accumulation of proton as a product of the water electrolysis, the electrode was rotated at 1,600 rpm during the measurement.

In this measurement, an electrochemical cell was used, and the potential was swept from the negative direction. The electrochemical cell had the working, counter and reference electrodes inserted from above. The potential sweep rate was 5 mV/s so that the potential at which the current started to increase (onset potential) would readily be distinguished.

Using the above evaluation apparatus under the above conditions, the current density at a potential of 1.5 V vs. SHE and the overvoltage (polarization from the equilibrium potential) at 1 mA/cm$^2$ were measured.

<Electrochemical measurement 3, Tafel plot (RDE electrode)>

To evaluate the water oxidation catalytic performance of the manganese oxide/carbon mixture catalyst, Tafel plot was measured. The vertical axis of the Tafel plot indicates the logarithm of the current density, and the vertical axis indicates the potential. The slope of the Tafel plot indicates how the potential should be increased to make the current density 10 times, and is an index of activity independent of the amount and the surface area of the catalyst. Plotting the value of the current when stabilized by conducting electrolysis at a constant potential, was repeatedly carried out while changing the potential stepwise, to prepare the Tafel plot. In the experiment, in the same manner as linear sweep voltammetry, three-electrode system was employed, using the glassy carbon RDE electrode having the manganese oxide/carbon mixture catalyst supported as the working electrode, a platinum wire as the counter electrode and a Ag/AgCl (saturated KCl) electrode (+0.199 V vs. SHE) as the reference electrode. For the electrolytic solution, a 0.5M $Na_2SO_4$ aqueous solution prepared with sodium sulfate, adjusted to have pH 7.5 with 0.1M NaOH aqueous solution was used. In order to prevent accumulation of proton as a product of the water electrolysis, the electrode was rotated at 1,600 rpm during the measurement.

<Evaluation 3 of oxygen evolution electrode catalyst properties (Example 9 and Comparative Examples 9 to 11)>

<Constitution of PEM type electrolytic cell>

Constitution of a PEM type electrolytic cell using the manganese oxide/carbon mixture catalyst was carried out as follows. An electrically conductive catalyst ink was prepared in the same manner as in the case of one to be supported on the RDE electrode. 500 $\mu$L of the electrically conductive catalyst ink was applied on carbon paper (EC-TP1-060T, ElectroChem Inc.) (shape:4 cm $\times$ 4 cm) and air-dried to evaporate ethanol, whereby the catalyst was made to be supported on the carbon paper to prepare the working electrode.

As the catalyst for the counter electrode, carbon supported 20 wt% platinum catalyst (20% Platinum on Vulcan XC-72, Item #PTC20-1, Fuel Cell Earth) was used. In the same manner as preparation of the working electrode, the counter electrode was prepared by preparing an electrically conductive catalyst ink, application to carbon paper and air-drying. As a polymer electrolyte membrane, Nafion 117 was used. The polymer electrolyte membrane was washed and protonated (pre-treatment) by being boiled in 3% hydrogen peroxide aqueous solution, pure water, a 1M sulfuric acid aqueous solution and then pure water each for one hour. Then, the polymer electrolyte membrane was sandwiched between the catalyst-coated surfaces of the working electrode and the counter electrode and hot-pressed using a hot pressing machine (A-010D, manufactured by FC-R&D) at 135°C with a clamping force of 600 kg for 10 minutes to prepare a membrane/electrolyte assembly (MEA). The MEA was attached to a casing of a PEM type electrolytic cell (3036, manufactured by FC-R&D).

<Electrochemical measurement 4, measurement of current-voltage curve (PEM type electrolytic cell)>

To evaluate the water oxidation catalytic performance of the manganese oxide/carbon mixture catalyst in an actual device, a current-voltage curve was measured using a PEM type electrolytic cell constituted by using the mixture catalyst. In this measurement, two-electrode system using only the working electrode and the counter electrode was employed, and the voltage applied was gradually increased to measure the current-voltage curve. Pure water was supplied to the PEM type electrolytic cell. The voltage increase rate was 5 mV/s so that the voltage at which the current started to increase would readily be distinguished.

<Evaluation 4 of oxygen evolution electrode catalyst properties (Examples 10 to 20 and Comparative Example 12>

<Constitution of PEM type electrolytic cell>

Constitution of a PEM type electrolytic cell using an electrode material of an electrically conductive substrate having the manganese oxide catalyst deposited was carried out as follows. The electrode material (shape:3 cm × 3 cm (Examples 10 to 12), shape: 2 cm × 2 cm (Examples 13 to 20)) was used as the working electrode, and the counter electrode was prepared using carbon supported 20 wt% platinum catalyst (20% Platinum on Vulcan XC-72, Item #PTC20-1, Fuel Cell Earth) as the catalyst for the counter electrode, by preparing an electrically conductive catalyst ink, application to carbon paper and air-drying. As a polymer electrolyte membrane, Nafion 117 was used. The polymer electrolyte membrane was washed and protonated (pre-treatment) by being boiled in 3% hydrogen peroxide aqueous solution, pure water, a 1M sulfuric acid aqueous solution and then pure water each for one hour. Then, the polymer electrolyte membrane was sandwiched between the catalyst-coated surfaces of the working electrode and the counter electrode and hot-pressed using a hot pressing machine (A-010D, manufactured by FC-R&D) at 135°C with a clamping force of 600 kg for 10 minutes to prepare a membrane/electrolyte assembly (MEA). The MEA had adhesion improved even at the time of electrolysis by means of two sheets of stainless mesh (#100), and was attached to a casing of a PEM type electrolytic cell (3036, manufactured by FC-R&D).

<Electrochemical measurement 5, measurement of current-voltage curve (PEM type electrolytic cell)>

To evaluate the water oxidation catalytic performance in an actual device, a current-voltage curve was measured at room temperature using a PEM type electrolytic cell constituted by using an electrode material of an electrically conductive substrate having the manganese oxide catalyst deposited. In this measurement, two-electrode system using only the working electrode and the counter electrode was employed, and the voltage applied was gradually increased to measure the current-voltage curve. Pure water was supplied to the PEM type electrolytic cell. The voltage increase rate was 5 mV/s so that the voltage at which the current started to increase would be readily be distinguished.

EXAMPLE 1

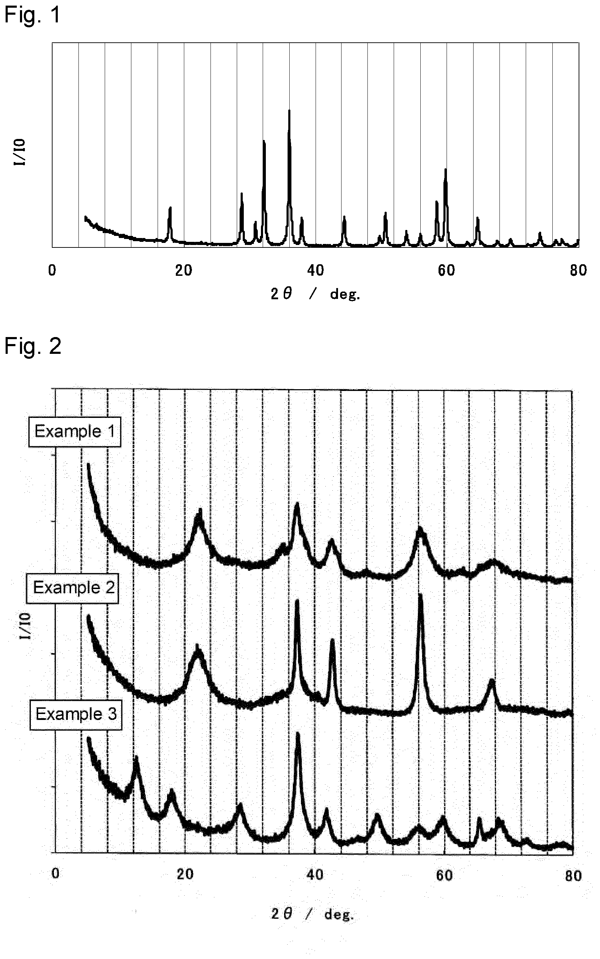

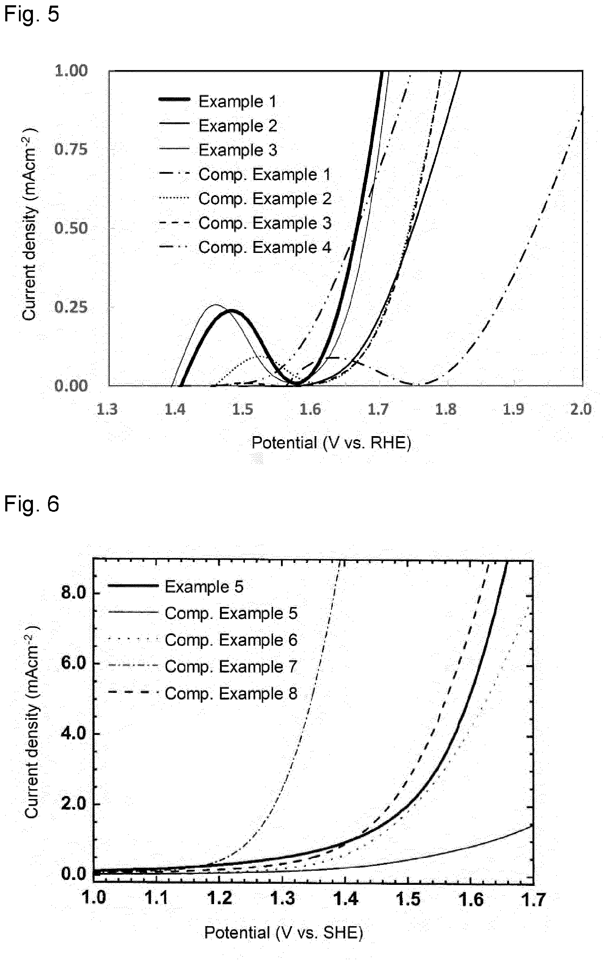

A manganese sulfate aqueous solution having a manganese concentration of 95 g/L was stirred, and a 1.05 mol/L sodium hydroxide aqueous solution was added while blowing air to obtain a manganese sulfate aqueous solution containing a manganese oxide. The obtained manganese oxide was single phase trimanganese tetroxide ($Mn_3O_4$). The XRD pattern of the obtained trimanganese tetroxide ($Mn_3O_4$) is shown in Fig. 1.
45 mg of the obtained trimanganese tetroxide ($Mn_3O_4$) was immersed in a beaker in which 240 g of a 3 mol/L sulfuric acid solution was put and stirred at 60°C for 24 hours to obtain a slurry containing black precipitates. An operation of subjecting the slurry to filtration through a membrane filter, putting the residue in a beaker in which 500 mL of pure water was put, and washing the solid with water for 1 hour, was repeated twice. Then, the slurry was subjected to filtration through a membrane filter again, the residue was put again in a beaker in which 500 mL of pure water was put, and the slurry was neutralized with a 1 mol/L NaOH solution until the slurry pH became 5.9, followed by filtration and drying to obtain a manganese oxide. The obtained manganese oxide showed an XRD pattern attributable to γ manganese oxide (γ$MnO_2$). Of the manganese oxide, physical properties are shown in Table 1, and the XRD pattern is shown in Fig. 2.
Using the manganese oxide, properties of the oxygen evolution electrode catalyst were evaluated. The results of evaluation of the properties are also shown in Table 1 and Fig. 5.

EXAMPLE 2

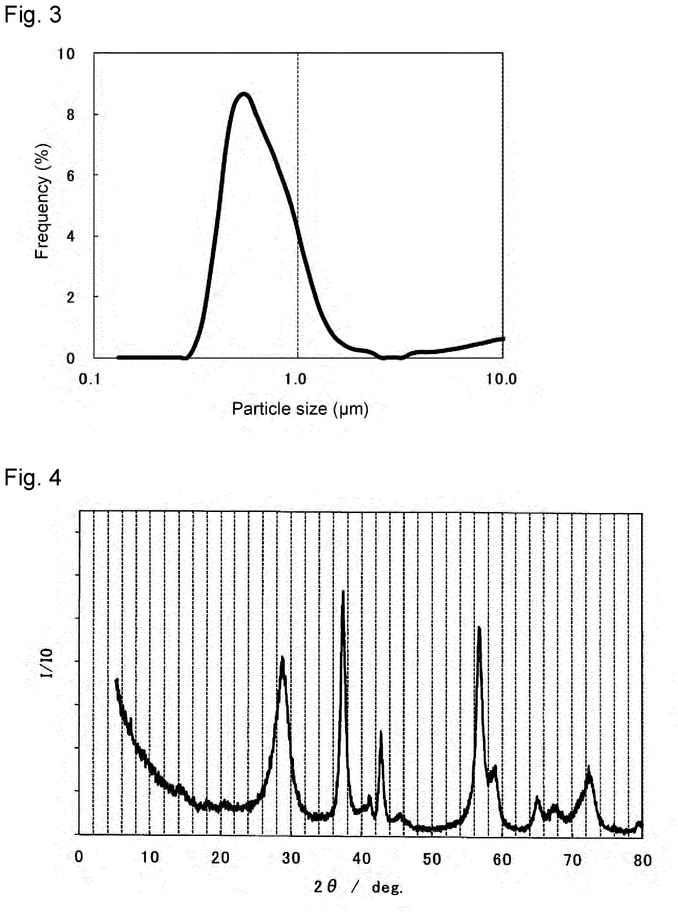

In an electrolytic cell in which a sulfuric acid/manganese sulfate mixed solution was put, electrolysis was conducted while a supplemental manganese sulfate solution having a manganese ion concentration of 47 g/L was continuously added, to electrodeposit a manganese oxide on a titanium anode. During the electrolysis, the electrolysis current density was 0.7 A/dm², and the electrolysis temperature was 96°C. The supplemental manganese sulfate solution was added so that the sulfuric acid concentration in the electrolytic cell would be 32 g/L, the electrolysis was conducted for 10 days, and the electrolysis voltage at the time of completion of the electrolysis was 2.3 V.
The obtained electrodeposit was separated from the electrode, ground to have an average secondary particle size of 40 μm, and washed with water and neutralized. The manganese oxide was flash-dried to obtain a manganese oxide having an average secondary particle size of 40 μm and at the same time, a submicron-level manganese oxide fine powder formed as by-product by overgrinding at the time of grinding was recovered by a bag filter of a dust collector at the time of flash-drying. The manganese oxide fine powder had an average secondary particle size of 0.6 μm, and had γ crystal phase. Of the manganese oxide fine powder, physical properties are shown in Table 1, the secondary particle size distribution is shown in Fig. 3, and the XRD pattern is shown in Fig. 2. Further, using the manganese oxide fine powder, properties of the oxygen evolution electrode catalyst were evaluated, and results of evaluation of the properties are shown in Table 1 and Fig. 5.

EXAMPLE 3

Manganese sulfate and ammonium sulfate were dissolved in water to obtain an ammonium ion-containing sulfuric acid/manganese sulfate mixed solution having a manganese ion concentration of 27.6 g/L and an ammonium ion concentration of 54 g/L.

Using the ammonium ion-containing sulfuric acid/manganese sulfate mixed solution as the electrolytic solution, electrolysis was conducted while an ammonium sulfate-containing manganese sulfate solution was continuously added so that the ammonium ion concentration and the sulfuric acid concentration in the electrolytic solution would be constant at 54 g/L and 30 g/L, respectively, to obtain an electrodeposit. The electrolysis current density was 0.8 A/dm$^2$, the electrolysis temperature was 96°C, and the electrolysis time was 25 hours.

The molar ratio of the ammonium ion concentration to the manganese ion concentration in the electrolytic solution ($NH_4^+/Mn^{2+}$) was 5.98, and the electrolysis voltage at the time of completion of the electrolysis was 1.93 V.

The obtained electrodeposit was separated from the electrode, ground, washed with water and neutralized, and dried to obtain a manganese oxide having an average secondary particle size of 22 $\mu$m.

Of the manganese oxide, physical properties are shown in Table 1, and the XRD pattern is shown in Fig. 2. Further, the results of evaluation of the properties of the manganese oxide are shown in Table 1 and Fig. 5.

COMPARATIVE EXAMPLE 1

Physical properties and results of evaluation of properties of the trimanganese tetroxide ($Mn_3O_4$) used as the raw material for producing the manganese oxide in Example 1 are shown in Table 1 and Fig. 5.

COMPARATIVE EXAMPLE 2

Physical properties and results of evaluation of properties of the manganese oxide having an average secondary particle size of 40 $\mu$m obtained at the time of flash drying in Example 2 are shown in Table 1 and Fig. 5.

COMPARATIVE EXAMPLE 3

The manganese oxide having an average secondary particle size of 40 $\mu$m obtained at the time of flash drying in Example 2 was further subjected to calcining treatment at 420°C for 36 hours. The obtained manganese oxide showed an XRD pattern attributable to β-phase manganese oxide ($\beta MnO_2$). Of the manganese oxide, physical properties and results of evaluation of properties are shown in Table 1 and Fig. 5, and the XRD pattern is shown in Fig. 4.

COMPARATIVE EXAMPLE 4

The oxygen evolution electrode catalyst was evaluated using commercial iridium oxide catalyst (manufactured by Wako Pure Chemical Industries, Ltd.), and the results of evaluation of the properties are shown in Table 1 and Fig. 5.

As shown in Table 1 and Fig. 5, it was found that the manganese oxide of the present invention, having the specific metallic valence, primary particle size and the secondary particle size, has high oxygen evolution electrode catalytic activity comparable to commercial platinum group catalysts.

EXAMPLE 4

0.25 g of the manganese oxide fine powder having an average secondary particle size of 0.6$\mu$m obtained in Example 2 and 4.75 g of electrically conductive carbon (Vulcan XC-72) were weighed, and ground and mixed in an agate mortar. The ground mixture was put in a container in which 50mL of ethanol and zirconia balls having a diameter of 0.3 mm were put, and rotated at 40 rpm for 24 hours to conduct ball mill mixing. The obtained slurry was subjected to sieving with a mesh size of 150 $\mu$m to remove the zirconia balls, whereby a manganese oxide/carbon mixture was recovered in the form of an ethanol slurry. To the recovered ethanol slurry, Nafion dispersion and the like were added to prepare an electrode, and properties of the oxygen evolution electrode catalyst were evaluated.

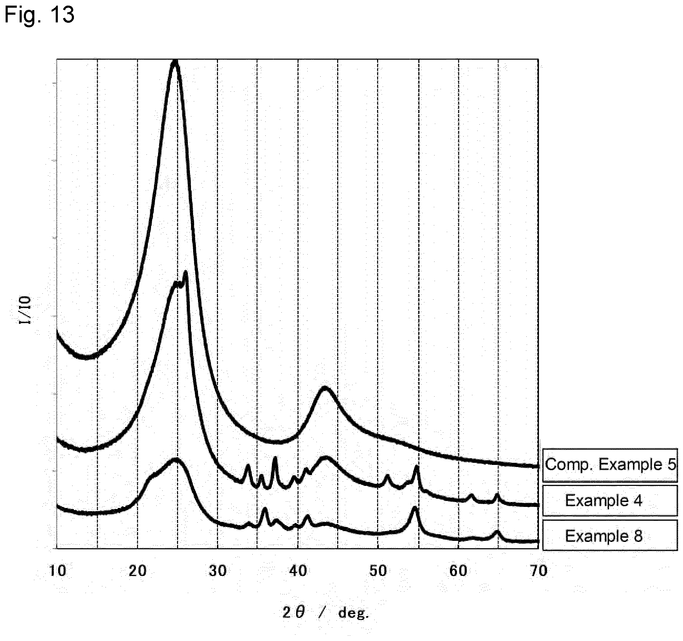

The ethanol slurry of the manganese oxide/carbon mixture was subjected to chemical analysis, whereupon the proportion of the manganese oxide to the total of the manganese oxide and carbon was 4.4 wt%. The XRD pattern of a mixed powder obtained by evaporating ethanol from the ethanol slurry of the manganese oxide/carbon mixture is shown in Fig. 13, and d values of principal diffraction lines lead from the XRD pattern are shown in Table 5. The proportion and the results of evaluation of the properties are shown in Table 2.

EXAMPLES 5 to 8

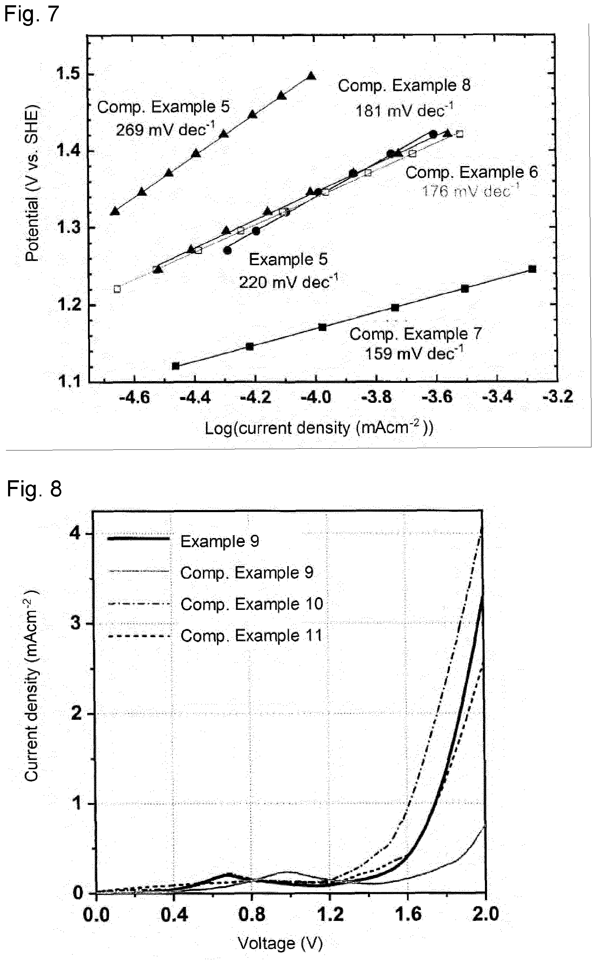

Ethanol slurries of a manganese oxide/carbon mixture having a proportion of the manganese oxide to the total of the manganese oxide and carbon of 9.9 wt%, 35.5 wt%, 19.7 wt% and 16.7 wt% were obtained in the same manner as in Example 4 except for the amount of the manganese oxide fine powder having an average secondary particle size of 0.6 $\mu$m and the electrically conductive carbon (Vulcan XC-72) charged. Electrodes were prepared in the same manner as in Example 4 except that the respective slurries were used, and properties of the oxygen evolution electrode catalysts were evaluated. The XRD pattern of a mixed pattern obtained by evaporating ethanol from the ethanol slurry of the manganese oxide/carbon mixture obtained in Example 8 is shown in Fig. 13, and d values of principal diffraction lines lead from the XRD pattern are shown in Table 5. The proportions and the results of evaluation of the properties are shown in Table 2, Figs. 6 and 7.

COMPARATIVE EXAMPLE 5

A mixture containing only electrically conductive carbon black (Vulcan XC-72) and a diluted Nafion dispersion, without containing manganese oxide, was made to be supported on an glassy carbon RDE electrode, and general evaluation of oxygen evolution electrode catalyst properties was conducted, and the results are shown in Table 2, Figs. 6 and 7. The XRD pattern of the carbon powder in Comparative Example 5 is shown in Fig. 13, and d values of principal diffraction lines lead from the XRD pattern are shown in Table 5.

COMPARATIVE EXAMPLE 6

An electrically conductive catalyst ink prepared by mixing commercial iridium oxide catalyst (manufactured by Wako Pure Chemical Industries, Ltd.), electrically conductive carbon black (Vulcan XC-72) and a diluted Nafion dispersion, was made to be supported on a glassy carbon RDE electrode, evaluation of oxygen evolution electrode catalyst was conducted, and the properties are shown in Table 2, Figs. 6 and 7.

COMPARATIVE EXAMPLE 7

An electrically conductive catalyst ink prepared by mixing carbon supported 20 wt% iridium catalyst (20 wt% Iridium on Vulcan XC-72, Item #P40A200, Premetek) and a diluted Nafion dispersion was made to be supported on a glassy carbon RDE electrode, evaluation of oxygen evolution electrode catalyst was conducted, and the properties are shown in Figs. 6 and 7.

COMPARATIVE EXAMPLE 8

An electrically conductive catalyst ink prepared by mixing carbon supported 20 wt% platinum catalyst (20 wt% Platinum on Vulcan XC-72, Item #PTC20-1, Fuel Cell Earth) and a diluted Nafion dispersion was made to be supported on a glassy carbon RDE electrode, evaluation of oxygen evolution electrode catalyst was conducted, and the properties are shown in Figs. 6 and 7.

As shown in Table 2 and Figs. 6 and 7, the manganese oxide/carbon mixture obtained by using the manganese oxide of the present invention, with favorable contact with the electrically conductive carbon by e.g. wet ball mill mixing treatment, exhibited electrode catalytic activity. Particularly, it was found that the manganese oxide/carbon mixture having a proportion of the manganese oxide to the total of the manganese oxide and carbon of from 0.5 wt% to 40 wt% exhibited high oxygen evolution electrode catalytic activity comparable to commercial platinum group catalysts.

EXAMPLE 9

A PEM type electrolytic cell was constituted by using the ethanol slurry of the manganese oxide/carbon mixture used in Example 5, and evaluation of oxygen evolution electrode catalyst properties was conducted. The results are shown in Fig. 8.

COMPARATIVE EXAMPLE 9

A PEM type electrolytic cell (evaluation 3) was constituted by using a mixture containing only electrically conductive carbon black (Vulcan XC-72) and a diluted Nafion dispersion, without containing manganese oxide, and evaluation of oxygen evolution electrode catalyst properties was conducted. The results are shown in Fig. 8.

COMPARATIVE EXAMPLE 10

A PEM type electrolytic cell (evaluation 3) was constituted by using an electrically conductive catalyst ink prepared by mixing carbon supported 20 wt% iridium catalyst (20% Iridium on Vulcan XC-72, Item #P40A200, Premetek) and a diluted Nafion dispersion, and evaluation of oxygen evolution electrode catalyst properties was conducted. The results are shown in Fig. 8.

COMPARATIVE EXAMPLE 11

A PEM type electrolytic cell (evaluation 3) was constituted by using an electrically conductive catalyst ink prepared by mixing carbon supported 20 wt% platinum catalyst (20% Platinum on Vulcan XC-72, ,Item #PTC20-1,Fuel Cell Earth) and a diluted Nafion dispersion, and evaluation of oxygen evolution electrode catalyst properties was conducted. The results are shown in Fig. 8.

As shown in Fig. 8, the manganese oxide/carbon mixture of the present invention has a structure to achieve a high energy conversion efficiency in principle and was found to exhibit high oxygen evolution electrode catalytic activity comparable to commercial platinum group catalysts even in a PEM type electrolytic cell for which use of a non-noble metal catalyst has been desired.

EXAMPLE 10

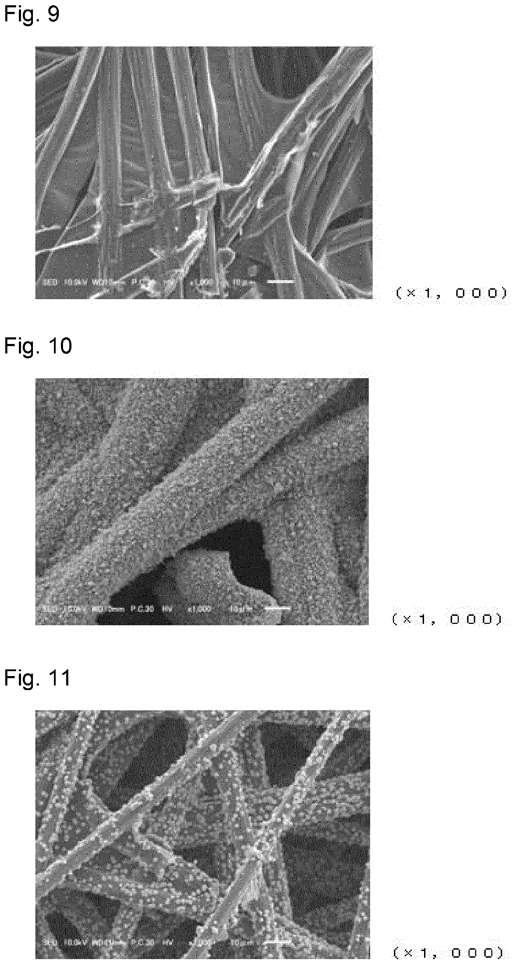

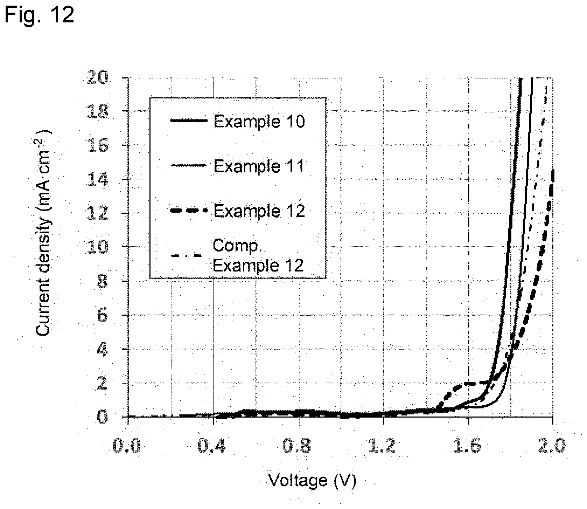

Electrolysis was conducted for 15 minutes under the same conditions as in Example 2 except that the titanium anode plate was changed to carbon paper (TGP-H-060, manufactured by Toray Industries, Inc.) as an electrically conductive substrate and that the temperature was 94°C. After completion of the electrolysis, the carbon paper having a manganese oxide electrodeposited thereon was washed with water, air-dried and cut into a size of 3 cm $\times$ 3 cm to prepare an electrode material. As shown in the SEM photograph (Fig. 10) of surface appearance of the electrode material, the manganese oxide catalyst covering the carbon fibers (Fig. 9) constituting the carbon paper was confirmed. Using the electrode material, in accordance with <Evaluation 4 of oxygen evolution electrode catalyst properties>, a PEM type electrolytic cell was constituted, and evaluation of oxygen evolution electrode catalyst properties was conducted. The results are shown in Table 3 and Fig. 12.

EXAMPLE 11

Electrolysis was conducted under the same conditions as in Example 10 except that the electrolysis time was 3 minutes. After completion of the electrolysis, the carbon paper having a manganese oxide electrodeposited thereon was washed with water, air-dried and cut into a size of 3 cm $\times$ 3 cm to prepare an electrode material. As shown in the SEM photograph (Fig. 11) of surface appearance of the electrode material, the manganese oxide catalyst precipitating in an islands form on the carbon fibers (Fig. 9) constituting the carbon paper was confirmed. Using the electrode material, in accordance with <Evaluation 4 of oxygen evolution electrode catalyst properties>, a PEM type electrolytic cell was constituted, and evaluation of oxygen evolution electrode catalyst properties was conducted. The results are shown in Table 3 and Fig. 12.

EXAMPLE 12

Electrolysis was conducted under the same conditions as in Example 10 except that the electrically conductive substrate was changed to a titanium mesh (ST/Ti/20/300/67, Nikkotechno). After completion of the electrolysis, the titanium mesh having a manganese oxide electrodeposited thereon was washed with water, air-dried and cut into a size of 3 cm $\times$ 3 cm to prepare an electrode material. Using the electrode material, in accordance with <Evaluation 4 of oxygen evolution electrode catalyst properties>, a PEM type electrolytic cell was constituted, and evaluation of oxygen evolution electrode catalyst properties was conducted. The results are shown in Table 3 and Fig. 12.

COMPARATIVE EXAMPLE 12

A PEM type electrolytic cell was constituted by using an electrically conductive ink prepared by mixing carbon supported 20 wt% platinum catalyst (20 wt% Platinum on Vulcan XC-72, Item #PTC20-1, Fuel Cell Earth) and a diluted Nafion dispersion, in accordance with <Evaluation 4 of oxygen evolution electrode catalyst properties>, and evaluation of oxygen evolution electrode catalyst properties was conducted. The results are shown in Table 3 and Figs. 12 and 18 to 20.

EXAMPLE 13

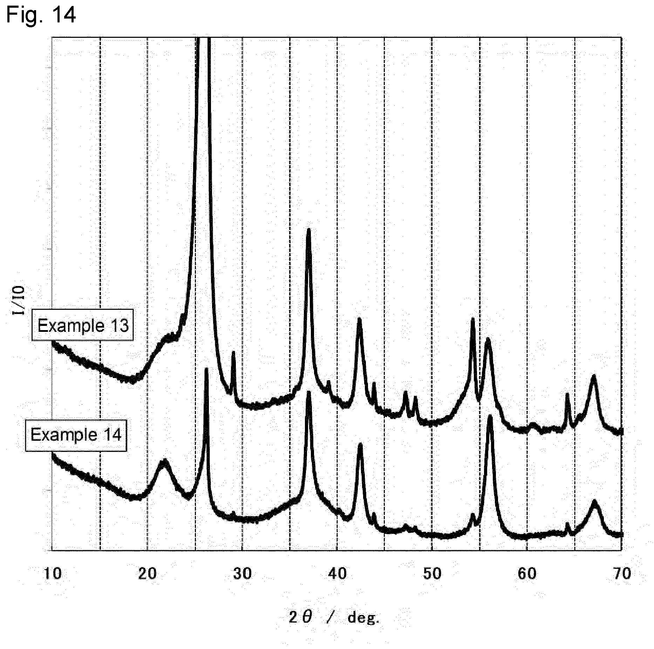

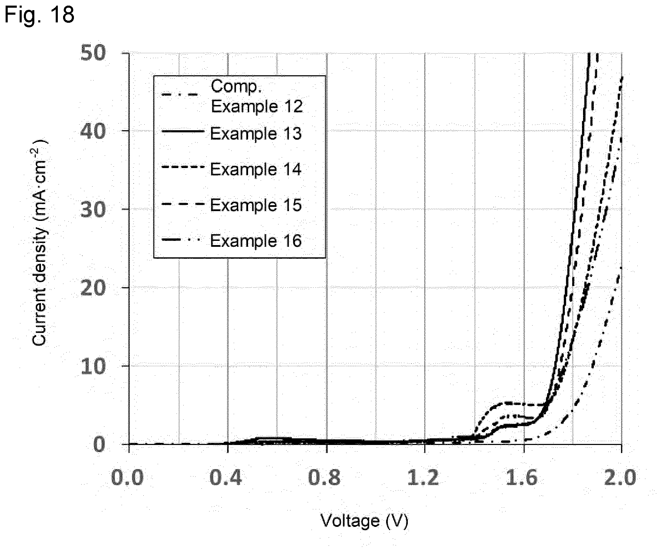

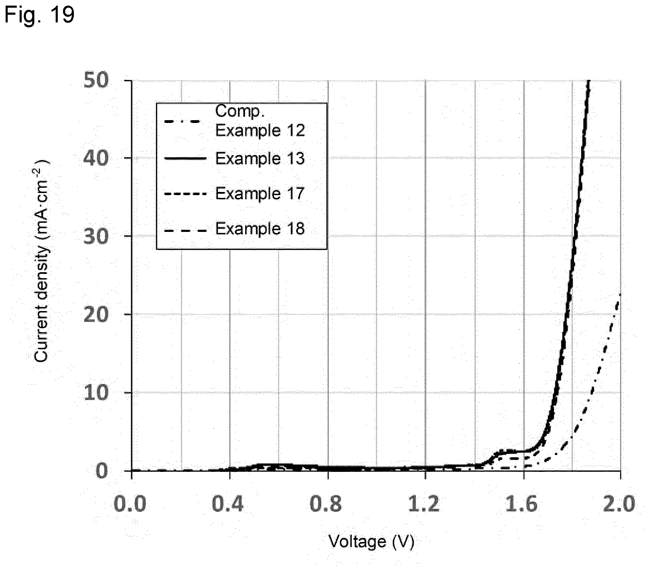

Electrolysis was conducted for 14 minutes under the same conditions as in Example 10 except that the temperature was 93°C. After completion of the electrolysis, the carbon paper having a manganese oxide electrodeposited thereon was washed with water, air-dried and cut into a size of 2 cm × 2 cm to prepare an electrode material. The XRD pattern of the electrode material is shown in Fig. 14, and d values of principal diffraction lines lead from the XRD pattern are shown in Table 6. Using the electrode material, in accordance with <Evaluation 4 of oxygen evolution electrode catalyst properties>, a PEM type electrolytic cell was constituted, and evaluation of oxygen evolution electrode catalyst properties was conducted. The results are shown in Table 4 and Figs. 18 and 19.

EXAMPLE 14

Electrolysis was conducted for 29 minutes under the same conditions as in Example 13 except that the temperature was 94°C. After completion of the electrolysis, the carbon paper having a manganese oxide electrodeposited thereon was washed with water, air-dried and cut into a size of 2 cm × 2 cm to prepare an electrode material. The XRD pattern of the electrode material is shown in Fig. 14, and d values of principal diffraction lines lead from the XRD pattern are shown in Table 6. Using the electrode material, in accordance with <Evaluation 4 of oxygen evolution electrode catalyst properties>, a PEM type electrolytic cell was constituted, and evaluation of oxygen evolution electrode catalyst properties was conducted. The results are shown in Table 4 and Fig. 18.

EXAMPLE 15

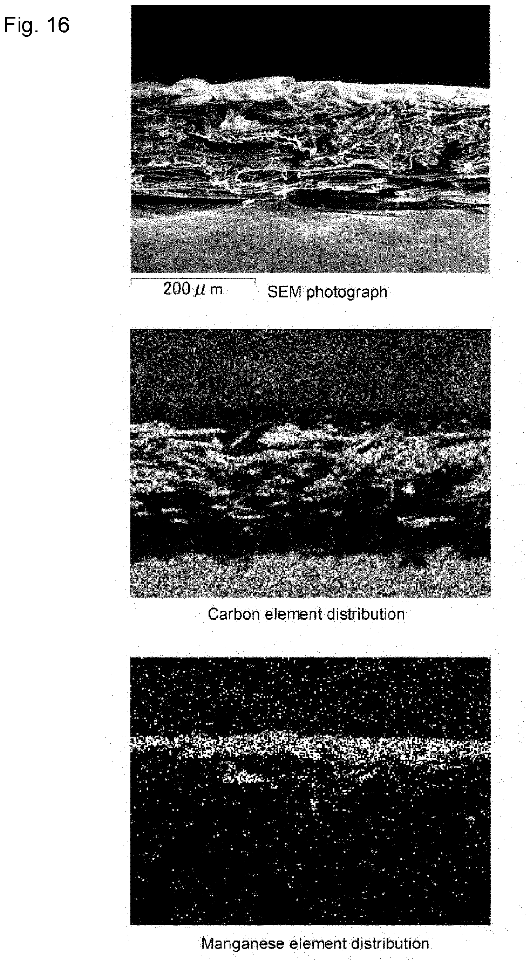

Electrolysis was conducted for 15 minutes under the same conditions as in Example 13 except that one side of carbon paper (TGP-H-060, manufactured by Toray Industries, Inc.) as the electrically conductive substrate was covered with a silicon film and that the temperature was 94°C. After completion of the electrolysis, electrodeposition only on one side was visually observed. The carbon paper having a manganese oxide electrodeposited thereon was washed with water, air-dried and cut into a size of 2 cm × 2 cm to prepare an electrode material. The SEM photograph and EPMA photographs of the cut cross section of the electrode material are shown in Fig. 16. Concentration of manganese element only in the vicinity of one side was observed. Using the electrode material, in accordance with <Evaluation 4 of oxygen evolution electrode catalyst properties>, a PEM type electrolytic cell was constituted, and evaluation of oxygen evolution electrode catalyst properties was conducted. The results are shown in Table 4 and Fig. 18.

EXAMPLE 16

Electrolysis was conducted for 15 minutes under the same conditions as in Example 13 except that the carbon paper (TGP-H-060, manufactured by Toray Industries, Inc.) as the electrically conductive substrate was changed to water repellent carbon paper (TGP-H-060H, manufactured by Toray Industries, Inc.) having water repellent treatment applied thereto, that one side of the electrically conductive substrate was covered with a silicon film, and that the temperature was 93.5°C. After completion of the electrolysis, electrodeposition only on one side was visually observed. The carbon paper having a manganese oxide electrodeposited thereon was washed with water, air-dried and cut into a size of 2 cm × 2 cm to prepare an electrode material. Using the electrode material, in accordance with <Evaluation 4 of oxygen evolution electrode catalyst properties>, a PEM type electrolytic cell was constituted, and evaluation of oxygen evolution electrode catalyst properties was conducted. The results are shown in Table 4 and Fig. 18.

EXAMPLE 17

The electrode material of 2 cm × 2 cm prepared in the same manner as in Example 13 was further subjected to, as the post-treatment, heat treatment in the air atmosphere at 230°C for 2 hours, and washed with water and air-dried to prepare an electrode material. Using the electrode material, in accordance with <Evaluation 4 of oxygen evolution electrode catalyst properties>, a PEM type electrolytic cell was constituted, and evaluation of oxygen evolution electrode catalyst properties was conducted. The results are shown in Table 4 and Fig. 19.

EXAMPLE 18

The electrode material of 2 cm × 2 cm prepared in the same manner as in Example 13 was further subjected to, as the post-treatment, heat treatment in the air atmosphere at 230°C for 2 hours, and immersed in a 1 mol/L sulfuric acid solution for one hour, washed with water and air-dried to prepare an electrode material. Using the electrode material, in accordance with <Evaluation 4 of oxygen evolution electrode catalyst properties>, a PEM type electrolytic cell was constituted, and evaluation of oxygen evolution electrode catalyst properties was conducted. The results are shown in Table 4 and Fig. 19.

EXAMPLE 19

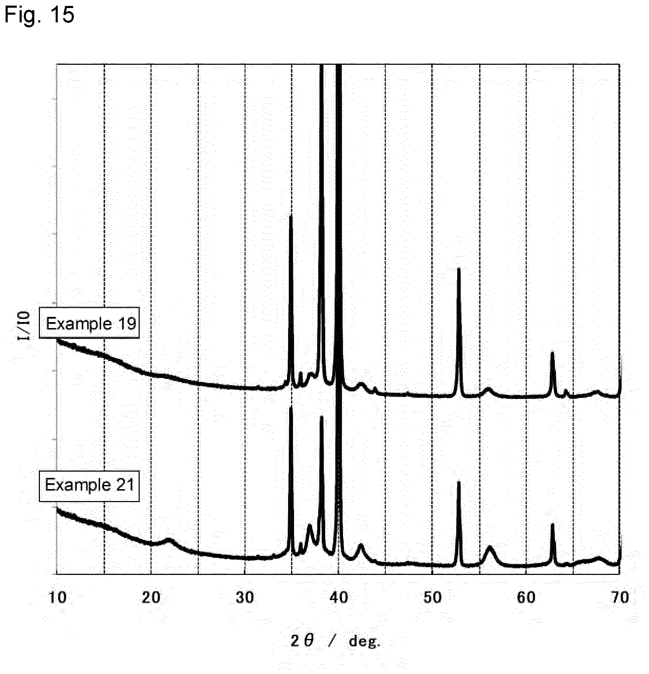

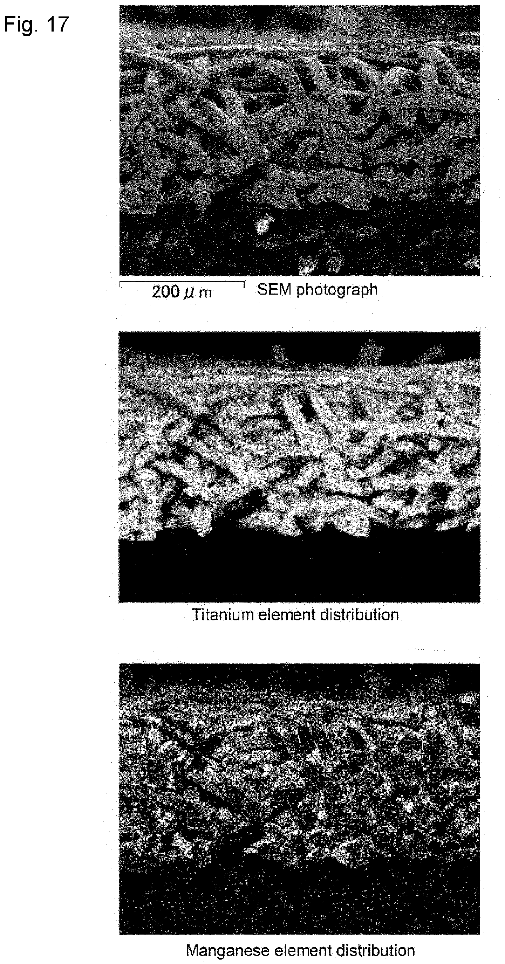

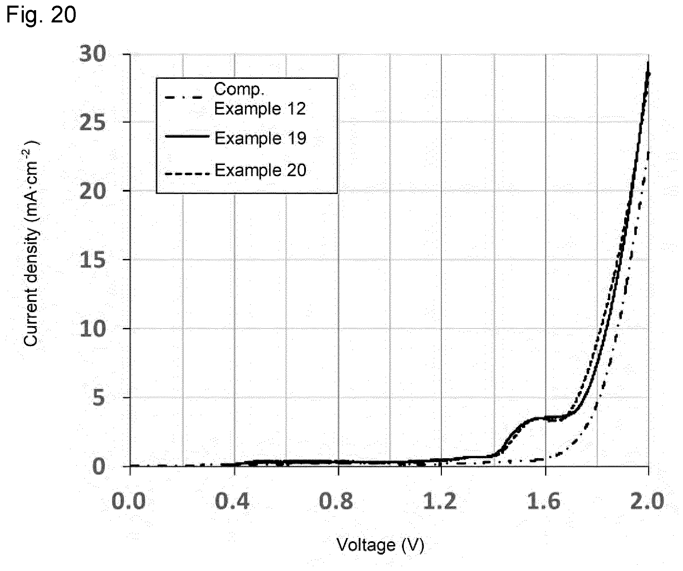

Electrolysis was conducted under the same conditions as in Example 13 except that the electrically conductive substrate was changed to a titanium mesh (ST/Ti/20/300/67, Nikkotechno) and that the temperature was 94°C. After completion of the electrolysis, the titanium mesh having a manganese oxide electrodeposited thereon was washed with water, air-dried and cut into a size of 2 cm × 2 cm to prepare an electrode material. The XRD pattern of the electrode material is shown in Fig. 15, and d values of principal diffraction lines lead from the XRD pattern are shown in Table 6. The SEM photograph and EPMA photographs of the cut cross section of the electrode material are shown in Fig. 17. Dispersion of manganese element even into the inside of the substrate was observed. Using the electrode material, in accordance with <Evaluation 4 of oxygen evolution electrode catalyst properties>, a PEM type electrolytic cell was constituted, and evaluation of oxygen evolution electrode catalyst properties was conducted. The results are shown in Table 4 and Fig. 20.

EXAMPLE 20

The electrode material of 2 cm × 2 cm prepared in the same manner as in Example 19 was further subjected to, as the post treatment, heat treatment in the air atmosphere at 230°C for 2 hours, and washed with water and air-dried to prepare an electrode material. Using the electrode material, in accordance with <Evaluation 4 of oxygen evolution electrode catalyst properties>, a PEM type electrolytic cell was constituted, and evaluation of oxygen evolution electrode catalyst properties was conducted. The results are shown in Table 4 and Fig. 20.

EXAMPLE 21

Electrolysis was conducted for 30 minutes under the same conditions as in Example 19 except that the temperature was 93.5°C. After completion of the electrolysis, the titanium mesh having a manganese oxide electrodeposited thereon was washed with water, air-dried and cut into a size of 2 cm × 2 cm to prepare an electrode material. The XRD pattern of the electrode material is shown in Fig. 15, and d values of principal diffraction lines lead from the XRD pattern are shown in Table 6.

As shown in Tables 3 and 4 and Figs. 12, 18 to 20, the manganese oxide composite electrode material of the present invention has a structure to achieve a high energy conversion efficiency in principle and was found to exhibit high oxygen evolution electrode catalytic activity comparable to or higher than commercial platinum group catalysts even in a PEM type electrolytic cell for which use of a non-noble metal catalyst has been desired.

INDUSTRIAL APPLICABILITY

The manganese oxide and the manganese oxide/carbon mixture of the present invention have high oxygen evolution electrode catalytic activity comparable to conventional noble metal type catalysts and accordingly when used as an anode catalyst for oxygen evolution in industrial water electrolysis conducted under alkaline or neutral conditions or in water electrolysis using a PEM type electrolytic cell, they are capable of producing hydrogen and oxygen at very low production costs.

Further, by adding carbon dioxide to the reaction system, carbon dioxide is reduced at the cathode, whereby hydrocarbon compounds (such as formic acid, formaldehyde, methanol, methane, ethane and propane) may be produced.

The entire disclosures of Japanese Patent Application No. 2017-239743 filed on December 14, 2017 and Japanese Patent Application No. 2018-124708 filed on June 29, 2018, including specifications, claims, drawings and summaries are incorporated herein by reference in their entireties.

[Table 1]

| | Physical properties of catalyst material | | | | | | | | | Measured values of evaluation 1 of oxygen evolution electrode catalyst properties | |
|---|---|---|---|---|---|---|---|---|---|---|---|
| | Metallic valence | Crystal system | Primary particle size (nm) | | | Average secondary particle size ($\mu$m) | BET specific surface area ($m^2/g$) | Alkali potential (mV) | Bulk density ($g/cm^3$) | Current density at 1.7 V vs. RHE ($mA/cm^2$) | Overvoltage at 0.5 $mA/cm^2$ (V) |
| | | | Average minor axis length | Average major axis length | Average | | | | | | |
| Ex. 1 | 3.94 | $\gamma$ | 9 | 45 | 27 | 10 | 255 | 220 | 0.7 | 0.937 | 0.437 |
| Ex. 2 | 3.94 | $\gamma$ | 12 | 34 | 23 | 0.6 | 40 | 280 | 1.5 | 0.222 | 0.520 |
| Ex. 3 | 3.92 | $\alpha$ | 16 | 80 | 48 | 22 | 95 | 250 | 1.4 | 0.764 | 0.451 |
| Comp. Ex. 1 | 2.67 | $Mn_3O_4$ | 40 | 50 | 45 | 9 | 5.9 | 80 | 2.0 | - | 0.700 |
| Comp. Ex. 2 | 3.92 | $\gamma$ | 24 | 100 | 62 | 40 | 28 | 250 | 2.2 | 0.197 | 0.514 |
| Comp. Ex. 3 | 3.99 | $\beta$ | 20 | 60 | 40 | 40 | 13.6 | 150 | 2.2 | 0.191 | 0.516 |
| Comp. Ex. 4 | - | - | 86 | 120 | 103 | 60 | 0.2 | - | - | 0.686 | 0.437 |

[Table 2]

| | Method for preparing catalyst material | Properties of composition | | | | | Measured values of evaluation 2 of oxygen evolution electrolyte catalyst | | |
|---|---|---|---|---|---|---|---|---|---|
| | | Average secondary particle size ($\mu$m) | Mn (wt%) | C (wt%) | Ethanol (wt%) | $MnO_2$/ ($MnO_2$+C) (wt%) | Current density at 1.5 V vs. SHE (mA/cm$^2$) | Overvoltage at 1 mA/cm$^2$ (V) | Tafel slope (mV/dec) |
| Ex. 4 | $MnO_2$/C ball mill slurry mixing | - | 0.14 | 4.78 | 94.8 | 4.4 | 2.128 | 0.590 | 194 |
| Ex. 5 | $MnO_2$/C ball mill slurry mixing | 10.3 | 0.27 | 3.66 | 95.7 | 9.9 | 2.015 | 0.619 | 219 |
| Ex. 6 | $MnO_2$/C ball mill slurry mixing | 6.7 | 1.30 | 3.35 | 94.2 | 35.5 | 0.991 | 0.713 | 187 |
| Ex. 7 | $MnO_2$/C ball mill slurry mixing | 9.0 | 0.86 | 5.15 | 93.1 | 19.7 | 0.609 | 0.766 | 267 |
| Ex. 8 | $MnO_2$/C ball mill slurry mixing | - | 0.65 | 5.10 | 93.7 | 16.7 | 0.720 | 0.743 | 188 |
| Comp. Ex. 5 | C alone | - | - | - | - | 0 | 0.467 | 0.841 | 269 |
| Comp. Ex. 6 | $IrO_2$/C physical mixing | - | - | - | - | - | 1.829 | 0.655 | 178 |

[Table 3]

| | | Physical properties of manganese oxide composite electrode material | | | | | | | Measured values of evaluation 4 of oxygen evolution electrode catalyst properties |
|---|---|---|---|---|---|---|---|---|---|
| | Covering method | Electrically conductive substrate | | | | Catalyst | | | Current density at 1.8 V vs. RHE (mA/cm$^2$) |
| | | Material species | Fiber diameter ($\mu$m) | Substrate thickness (mm) | Porosity (%) | Catalyst species | Covering state | Catalyst amount per geometrical area (mg/cm$^2$) | |
| Ex. 10 | Electrodeposition | Carbon | 10 | 0.19 | 78 | Mn oxide | Whole surface | 6.1 | 11.616 |
| Ex. 11 | Electrodeposition | Carbon | 10 | 0.19 | 78 | Mn oxide | Islands form | 1.1 | 3.617 |
| Ex. 12 | Electrodeposition | Titanium | 20 | 0.2 | 67 | Mn oxide | Whole surface | 7.7 | 3.611 |
| Comp. Ex. 12 | Coating | Carbon | - | 0.19 | - | Carbon supported Pt | Whole surface | 0.06 | 4.611 |

[Table 4]

| | | Manganese oxide composite electrode material | | | | | | | | Measured values of evaluation 4 of oxygen evolution electrode catalyst properties |
|---|---|---|---|---|---|---|---|---|---|---|
| | | | Electrically conductive substrate | | | | Catalyst | | | |
| | Covering method | Material species | Fiber diameter ($\mu$m) | Substrate thickness (mm) | Porosity (%) | Catalyst species | Catalyst amount per geometrical area (mg/cm$^2$) | Catalyst coated surface | Post-treatment | Current density at 1.8 V vs. RHE (mA/cm$^2$) |
| Ex. 13 | Electrodeposition | Carbon | 10 | 0.19 | 78 | Mn oxide | 5.7 | Both sides | Nil | 27.3 |
| Ex. 14 | Electrodeposition | Carbon | 10 | 0.19 | 78 | Mn oxide | 11.4 | Both sides | Nil | 13.3 |
| Ex. 15 | Electrodeposition | Carbon | 10 | 0.19 | 78 | Mn oxide | 2.8 | One side | Nil | 20.6 |
| Ex. 16 | Electrodeposition | Water repellent carbon | 10 | 0.19 | 78 | Mn oxide | 2.8 | One side | Nil | 13.5 |
| Ex. 17 | Electrodeposition | Carbon | 10 | 0.19 | 78 | Mn oxide | 5.7 | Both sides | Heat treatment | 26.7 |
| Ex. 18 | Electrodeposition | Carbon | 10 | 0.19 | 78 | Mn oxide | 5.7 | Both sides | Heat treatment and acid treatment | 25.0 |
| Ex. 19 | Electrodeposition | Titanium | 20 | 0.2 | 67 | Mn oxide | 5.7 | Both sides | Nil | 7.6 |
| Ex. 20 | Electrodeposition | Titanium | 20 | 0.2 | 67 | Mn oxide | 5.7 | Both sides | Heat treatment | 9.2 |
| Ex. 21 | Electrodeposition | Titanium | 20 | 0.2 | 67 | Mn oxide | 11.4 | Both sides | Nil | - |
| Ref.) Comp. Ex. 12 | Coating | Carbon | - | 0.19 | - | Pt | 0.06 | One side | Nil | 4.6 |

[Table 5]

|  | Diffraction line 1 | Diffraction line 2 | Diffraction line 3 | Diffraction line 4 | Diffraction line 5 | Diffraction line 6 | Diffraction line 7 | Diffraction line 8 |
|---|---|---|---|---|---|---|---|---|
| Ex. 4 | 0.3546 | 0.2646 | 0.2528 | 0.2416 | 0.2190 | 0.2082 | 0.1674 | 0.1436 |
| Ex. 8 | 0.3510 | 0.2670 | 0.2493 | 0.2405 | 0.2197 | 0.2074 | 0.1677 | 0.1436 |
| Comp. Ex. 5 | 0.3605 | 0.2070 | 0.174 | - | - | - | - | - |

[Table 6]

| | Diffraction line 1 | Diffraction line 2 | Diffraction line 3 | Diffraction line 4 | Diffraction line 5 | Diffraction line 6 | Diffraction line 7 | Diffraction line 8 | Diffraction line 9 | Diffraction line 10 |
|---|---|---|---|---|---|---|---|---|---|---|
| Ex. 13 | 0.4077 | 0.3388 | 0.3066 | 0.2427 | 0.2132 | 0.1688 | 0.1648 | 0.1397 | - | - |
| Ex. 14 | 0.4073 | 0.3390 | 0.3067 | 0.2428 | 0.2128 | 0.1689 | 0.1637 | 0.1392 | - | - |
| Ex. 19 | 0.4081 | - | 0.2565 | 0.2422 | 0.2353 | 0.2251 | 0.2129 | - | 0.1644 | 0.1390 |
| Ex. 21 | 0.4040 | - | 0.2564 | 0.2437 | 0.2352 | 0.2250 | 0.2134 | - | 0.1639 | 0.1379 |

**Claims**

1. A manganese oxide for an oxygen evolution anode catalyst in water electrolysis, which is a manganese oxide having a manganese metallic valence of higher than 3.0 and at most 4.0, having an average primary particle size of at most 80 nm and an average secondary particle size of at most 25 $\mu$m.

2. The manganese oxide according to Claim 1, which has a BET specific surface area of at least 10 $m^2/g$ and at most 260 $m^2/g$.

3. The manganese oxide according to Claim 1 or 2, which has a crystal structure of $\gamma$ manganese dioxide or $\alpha$ manganese dioxide.

4. The manganese oxide according to any one of Claims 1 to 3, wherein the potential (alkali potential) measured in a 40wt% KOH solution based on a mercury/mercury oxide reference electrode is at least 200 mV and at most 320 mV.

5. A manganese oxide/carbon mixture for an oxygen evolution anode catalyst in water electrolysis, which is a mixture of the manganese oxide as defined in any one of Claims 1 to 4, and electrically conductive carbon, wherein the proportion of the manganese oxide to the total of the manganese oxide and the electrically conductive carbon is at least 0.5 wt% and at most 40 wt%.

6. The manganese oxide/carbon mixture according to Claim 5, which has interplanar spacings of at least 0.355±0.01 nm, 0.265±0.01 nm, 0.250±0.05 nm, 0.240±0.004 nm, 0.219±0.004 nm, 0.208±0.004 nm, 0.167±0.002 and 0.143±0.002 nm.

7. A manganese oxide composite electrode material which comprises an electrically conductive substrate constituted by fibers at least part of which are covered with the manganese oxide as defined in any one of Claims 1 to 4.

8. The manganese oxide composite electrode material according to Claim 7, wherein the manganese oxide covers the fibers in an amount per geometrical area of the electrically conductive substrate of at least 0.1 $mg/cm^2$ and at most 25 $mg/cm^2$.

9. The manganese oxide composite electrode material according to Claim 7 or 8, wherein the electrically conductive substrate is formed of carbon or titanium.

10. The manganese oxide composite electrode material according to any one of Claims 7 to 9, which has interplanar spacings of at least 0.405±0.01 nm, 0.34±0.01 nm, 0.306±0.005 nm, 0.244±0.004 nm, 0.213±0.004 nm, 0.169±0.002 nm, 0.164±0.002 nm and 0.139±0.002 nm.

11. The manganese oxide composite electrode material according to any one of Claims 7 to 9, which has interplanar spacings of at least 0.40±0.01 nm, 0.256±0.005 nm, 0.244±0.004 nm, 0.235±0.004 nm, 0.225±0.004 nm, 0.213±0.004 nm, 0.164±0.002 nm and 0.139±0.002 nm.

12. A laminate comprising the manganese oxide composite electrode material as defined in any one of Claims 7 to 11, and a polymer electrolyte membrane.

13. A method for producing the manganese oxide as defined in any one of Claims 1 to 4, which comprises subjecting a Mn oxide having low valence to disproportionation reaction with a high concentrated acid.

14. The production method according to Claim 13, wherein the Mn oxide having low valence is trimanganese tetroxide ($Mn_3O_4$).

15. A method for producing the manganese oxide as defined in any one of Claims 1 to 4, which comprises electrodepositing a manganese oxide by electrolysis of a sulfuric acid/manganese sulfate mixed solution, and grinding the electrodeposited manganese oxide.

16. The production method according to Claim 15, wherein the sulfuric acid/manganese sulfate mixed solution has a sulfuric acid concentration of higher than 25 g/L and at most 65 g/L.

17. The production method according to Claim 15 or 16, wherein the sulfuric acid concentration at the time of start of the electrolysis is lower than the sulfuric acid concentration at the time of completion of the electrolysis.

18. A method for producing the manganese oxide/carbon mixture as defined in Claim 5, which comprises mixing the manganese oxide as defined in any one of Claims 1 to 4 and the electrically conductive carbon in a slurry state.

19. A method for producing the manganese oxide composite electrode material as defined in any one of Claims 7 to 11, which comprises electrodepositing the manganese oxide as defined in any one of Claims 1 to 4 by electrolysis of a sulfuric acid/manganese sulfate mixed solution on the fibers constituting the electrically conductive substrate.

20. The production method according to Claim 19, which comprises electrodepositing the manganese oxide as defined in any one of Claims 1 to 4 in an amount per geometrical area of at least 0.1 mg/cm$^2$ and at most 25 mg/cm$^2$.

21. An oxygen evolution electrode active material in water electrolysis, which comprises the manganese oxide as defined in any one of Claims 1 to 4 or the manganese oxide/carbon mixture as defined in Claim 5 or 6.

22. An oxygen evolution electrode, which comprises the oxygen evolution electrode active material as defined in Claim 21.

23. A laminate comprising the oxygen evolution electrode as defined in Claim 22 and a polymer electrolyte membrane.

24. A water electrolysis apparatus, which comprises the manganese oxide composite electrode material as defined in any one of Claims 7 to 11 or the oxygen evolution electrode as defined in Claim 22.

25. A method for producing hydrogen, which comprises conducting water electrolysis using the manganese oxide composite electrode material as defined in any one of Claims 7 to 11 or the oxygen evolution electrode as defined in Claim 22.

Fig. 1

Fig. 2

Fig. 3

Fig. 4

Fig. 5

Fig. 6

Fig. 7

Fig. 8

Fig. 9

(×1,000)

Fig. 10

(×1,000)

Fig. 11

(×1,000)

Fig. 12

Fig. 13

Fig. 14

Fig. 15

Fig. 16

200 μm　　SEM photograph

Carbon element distribution

Manganese element distribution

Fig. 17

200 μm  SEM photograph

Titanium element distribution

Manganese element distribution

Fig. 18

Fig. 19

Fig. 20

## INTERNATIONAL SEARCH REPORT

| International application No. |
| --- |
| PCT/JP2018/045681 |

**A. CLASSIFICATION OF SUBJECT MATTER**
Int.Cl. C01G45/02(2006.01)i, B01J23/34(2006.01)i, C25B1/04(2006.01)i,
C25B11/06(2006.01)i

According to International Patent Classification (IPC) or to both national classification and IPC

**B. FIELDS SEARCHED**

Minimum documentation searched (classification system followed by classification symbols)
Int.Cl. C01G45/02, B01J23/34, C25B1/04, C25B11/06

| Documentation searched other than minimum documentation to the extent that such documents are included in the fields searched | |
| --- | --- |
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y<br>A | MENG, Yongtao et al., "Structure-Property Relationship of Bi functional $MnO_2$ Nanostructures: Highly Efficient, Ultra-Stable Electrochemical Water Oxidation and Oxygen Reduction Reaction Catalysts Identified in Alkaline Media", JOURNAL OF THE AMERICAN CHEMICAL SOCIETY, 24 July 2014, no. 136, pp. 11452–11464 | 1-2, 21-22, 24-25<br>1-5, 18, 21-25<br>6-17, 19-20 |

☒ Further documents are listed in the continuation of Box C.     ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 16 January 2019 (16.01.2019) | 29 January 2019 (29.01.2019) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
| --- | --- |

Form PCT/ISA/210 (second sheet) (January 2015)

**INTERNATIONAL SEARCH REPORT**

International application No.

PCT/JP2018/045681

C (Continuation).    DOCUMENTS CONSIDERED TO BE RELEVANT

| Category* | Citation of document, with indication, where appropriate, of the relevant passages | Relevant to claim No. |
|---|---|---|
| Y<br>A | JP 2015-129347 A (PANASONIC CORP.) 16 July 2015, paragraphs [0019], [0058], fig. 1 & WO 2015/083383 A1 | 1-5, 18, 21-25<br>6-17, 19-20 |
| Y<br>A | JP 2014-074207 A (HITACHI, LTD.) 24 April 2014, paragraph [0026] & EP 2905359 A1 paragraph [0029] & WO 2014/054336 A1 & DK 2905359 T | 1-5, 18, 21-25<br>6-17, 19-20 |
| Y<br>A | JP 2013-120680 A (KACHI, Naoyoshi) 17 June 2013, paragraph [0053] (Family: none) | 5, 18<br>1-4, 6-17, 19-25 |
| A | JP 59-023890 A (PLASMA GIKEN CO., LTD.) 07 February 1984, claims 1, 3, page 1, lower right column, line 16 to page 2, upper left column, line 4, page 2, lower left column, lines 17-19 (Family: none) | 1-25 |
| A | JP 5-009773 A (IBA INC.) 19 January 1993, claim 1 (Family: none) | 1-25 |
| A | JP 2016-203072 A (NISSAN MOTOR CO., LTD.) 08 December 2016, claims 1-3 (Family: none) | 1-25 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H08269761 A
- JP 2007514520 A
- JP 2015192993 A
- WO 2009154753 A
- JP 2017239743 A
- JP 2018124708 A

### Non-patent literature cited in the description

- **S.TRASATTI ; G.BUZZANCA.** *J.Electroanal.Chem.,* 1971, vol. 29, A1
- **A.HARRIMAN ; I.J.PICKERING ; J.M.THOMAS ; P.A.CHRISTENSEN.** *J. Chem. Soc., Faraday Trans.,* 1988, vol. 1 (84), 2795
- **Y.ZHAO ; N.M.VARGAS-BARBOSA ; E.A.HERNANDEZ-PAGAN ; T.E.MALLOUK.** *Small,* 2011, vol. 7, 2087
- **M.M.NAJAFPOUR ; G.RENGER ; M.HOLYNSKA ; A.N.MOGHADDAM ; E.-M.ARO ; R.CARPENTIER ; H.NISHIHARA ; J.J.EATON-RYE ; J.-R.SHEN ; S.I.ALLAKHVERDIEV.** *Chem.Rev.,* 2016, vol. 116, 2886
- **T.TAKASHIMA ; K.ISHIKAWA ; H.IRIE.** *J. Phys. Chem. C,* 2016, vol. 120, 24827
- **J.B.GERKEN ; J.G.MCALPIN ; J.Y.C.CHEN ; M.L.RIGSBY ; W.H.CASEY ; R.D.BRITT ; S.S.STAHL.** *J. Am. Chem. Soc.,* 2011, vol. 133, 14431
- **M.DINCA ; Y.SURENDRANATH ; D.G.NOCERA.** *Proc. Natl. Acad. Sci. U.S.A.,* 2010, vol. 107, 10337